# EUROPEAN PATENT APPLICATION

(11) **EP 4 478 353 A1**
(43) Date of publication of application: **18.12.2024**
(21) Application number: 24721041.2
(22) Date of filing: 30.04.2024
(51) Int. Cl.: G10L 17/24, G10L 25/78, G10L 15/22, G10L 25/51, G10L 13/02, G06F 18/22, G10L 15/26, H04R 3/00

(54) **ELECTRONIC DEVICE FOR PROCESSING VOICE SIGNAL, OPERATING METHOD THEREOF, AND STORAGE MEDIUM**

(30) Priority: 02.05.2023 KR 20230056984; 27.06.2023 KR 20230083001
(71) Applicant: Samsung Electronics Co., Ltd., Suwon-si, Gyeonggi-do 16677 (KR)
(72) Inventor: LEE, Taewoo, Suwon-si Gyeonggi-do 16677 (KR); KWON, Minseok, Suwon-si Gyeonggi-do 16677 (KR); KIM, Kyungtae, Suwon-si Gyeonggi-do 16677 (KR); PARK, Changho, Suwon-si Gyeonggi-do 16677 (KR); JEONG, Seokyeong, Suwon-si Gyeonggi-do 16677 (KR)
(74) Representative: HGF
(86) International application number: PCT/KR2024/005887
(87) International publication number: WO 2024/228540

(57) **Abstract**

According to an embodiment, an electronic device 101 may comprise a microphone 295 or 550, at least one processor 120, 292, or 520 and memory 130, 299, 530. According to an embodiment, the memory storing instructions that, when executed by the at least one processor, cause the electronic device to receive a first speech signal through the microphone, detect a wake word from the first speech signal, output a preset notification sound in response to detecting the wake word,, and remove a notification sound signal from a second speech signal, received through the microphone, based on the position of a detected notification sound signal in the second speech signal, wherein the notification sound signal corresponds to the output preset notification sound.

## Description

### [Technical Field]

An embodiment of the disclosure relates to an electronic device for processing a speech signal, an operation method thereof, and a storage medium.

### [Background Art]

More and more services and additional functions are being provided through electronic devices, e.g., smartphones. To meet the needs of various users and raise use efficiency of electronic devices, communication service carriers or device manufacturers are competing to develop electronic devices with different and diversified functionalities. Accordingly, various functions that are provided through electronic devices are evolving more and more. Various types of intelligent services are recently being offered for electronic devices and, among such intelligence services, speech recognition services may control electronic devices via speech recognition to provide various services to users.

In order to provide speech recognition services, an electronic device may be implemented with technologies that recognize and analyze human language (e.g., automatic speech recognition, natural language understanding, natural language generation, machine translation, dialog system, question and answer, speech recognition/synthesis). To provide high-quality speech recognition services to consumers, it is necessary to enhance speech recognition performance. To that end, there are being researched and developed methods for enhancing speech recognition performance by removing noise included in the speech signal input in the pre-processing step or adjusting the signal magnitude.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment, an electronic device may comprise a microphone or, memory, and at least one processor. According to an embodiment, the memory storing instructions that, when executed by the at least one processor, cause the electronic device to receive a first speech signal through the microphone during a first period. According to an embodiment, the instructions cause the electronic device to detect a wake word from the first speech signal. According to an embodiment, the instructions cause the electronic device to output a preset notification sound in response to detecting the wake word. According to an embodiment, the instructions cause the electronic device to detect a notification sound signal corresponding to the output notification sound from a second speech signal received through the microphone during a second period. According to an embodiment, the instructions cause the electronic device to remove the notification sound signal from the second speech signal of the second period, based on a position of the detected notification sound signal. According to an embodiment, the instructions cause the electronic device to perform speech recognition on the second speech signal of the second period where the notification sound signal is removed.

According to an embodiment, a method for processing a speech signal by an electronic device may comprise receiving a first speech signal through a microphone during a first period. According to an embodiment, the method may comprise detecting a wake word from the first speech signal. According to an embodiment, the method may comprise outputting a preset notification sound in response to detecting the wake word. According to an embodiment, the method may comprise detecting a notification sound signal corresponding to the output notification sound from a second speech signal received through the microphone during a second period. According to an embodiment, the method may comprise removing the notification sound signal from the second speech signal of the second period, based on a position of the detected notification sound signal. According to an embodiment, the method may comprise performing speech recognition on the second speech signal of the second period where the notification sound signal is removed.

According to an embodiment, in a non-transitory storage medium storing instructions, the instructions may be configured to, when executed by at least one processor of an electronic device, enable the electronic device to perform at least one operation. The at least one operation may comprise receiving a first speech signal through a microphone during a first period. According to an embodiment, the at least one operation may comprise detecting a wake word from the first speech signal and outputting a preset notification sound in response to detecting the wake word. According to an embodiment, the at least one operation may comprise detecting a notification sound signal corresponding to the output notification sound from a second speech signal received through the microphone during a second period. According to an embodiment, the at least one operation may comprise removing the notification sound signal from the second speech signal of the second period, based on a position of the detected notification sound signal. According to an embodiment, the at least one operation may comprise performing speech recognition on the second speech signal of the second period where the notification sound signal is removed.

### [Brief Description of Drawings]

FIG. 1 is a block diagram of an electronic device in a network environment according to an embodiment,
FIG. 2 is a block diagram illustrating an integrated intelligence system according to an embodiment,
FIG. 3 illustrates a form in which relationship information between concepts and actions is stored in a database according to an embodiment,
FIG. 4 illustrates a user terminal displaying a screen in which a received speech input is processed through an intelligent app according to an embodiment,
FIG. 5A is a block diagram illustrating an internal configuration of an electronic device according to an embodiment,
FIG. 5B is a block diagram illustrating a detailed configuration of an electronic device for processing a speech signal according to an embodiment,
FIG. 6 is a view illustrating example input signals when a notification sound overlaps, and does not overlap, a user speech, according to an embodiment,
FIG. 7 is a view illustrating an example signal corresponding to an original notification sound and a recorded notification sound according to an embodiment,
FIG. 8 is a flowchart illustrating operations by an electronic device to process a speech signal according to an embodiment,
FIG. 9 is a flowchart illustrating detailed operations of an electronic device according to an embodiment,
FIG. 10 is a view illustrating an example spectrogram of a reference signal for notification sound removal according to an embodiment,
FIG. 11 is a view illustrating an example spectrogram of a reference signal for notification sound search according to an embodiment,
FIG. 12 is a view illustrating an example method for removing a notification sound from an input speech signal according to an embodiment,
FIG. 13 is a view illustrating example input signals before/after notification sound removal when a notification sound overlaps, and does not overlap, a user speech, according to an embodiment,
FIG. 14 is a view illustrating a pre-processing operation for removing a notification sound before speech recognition according to an embodiment,
FIG. 15 is a flowchart illustrating operations of an electronic device to generate and store a reference signal according to an embodiment,
FIG. 16 is a view illustrating an example screen providing guide information for storing (or registering) a reference signal according to an embodiment,
FIG. 17 is a view illustrating a method for managing a notification sound for a specific speaker according to an embodiment,
FIG. 18 is a view illustrating a pre-processing operation for removing a notification sound for a specific speaker before speech recognition according to an embodiment, and
FIG. 19 is a view illustrating an example screen showing speech recognition results before and after notification sound removal.

### [Mode for the Invention]

Embodiments of the present invention are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

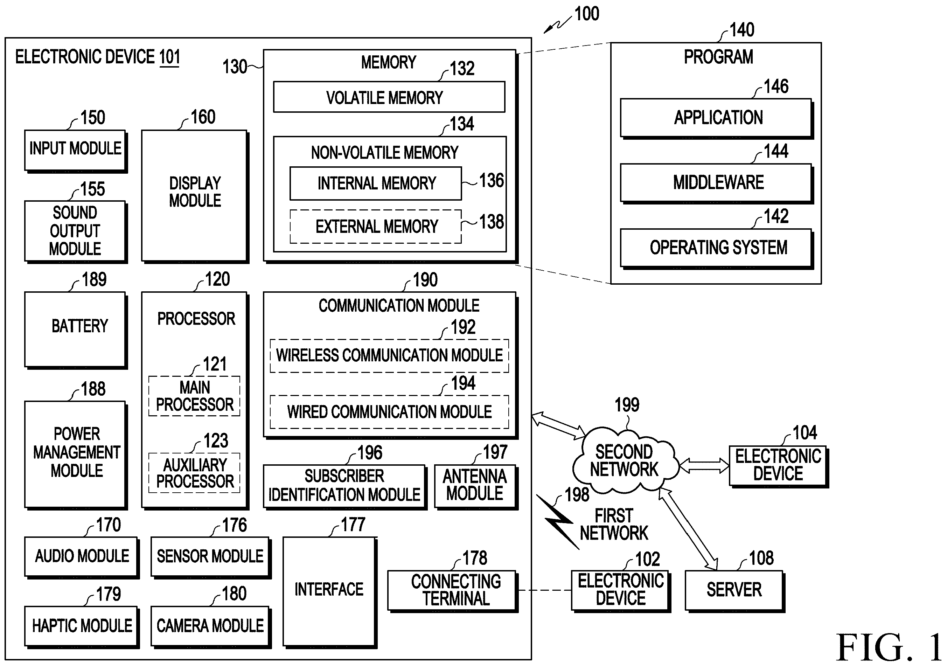

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

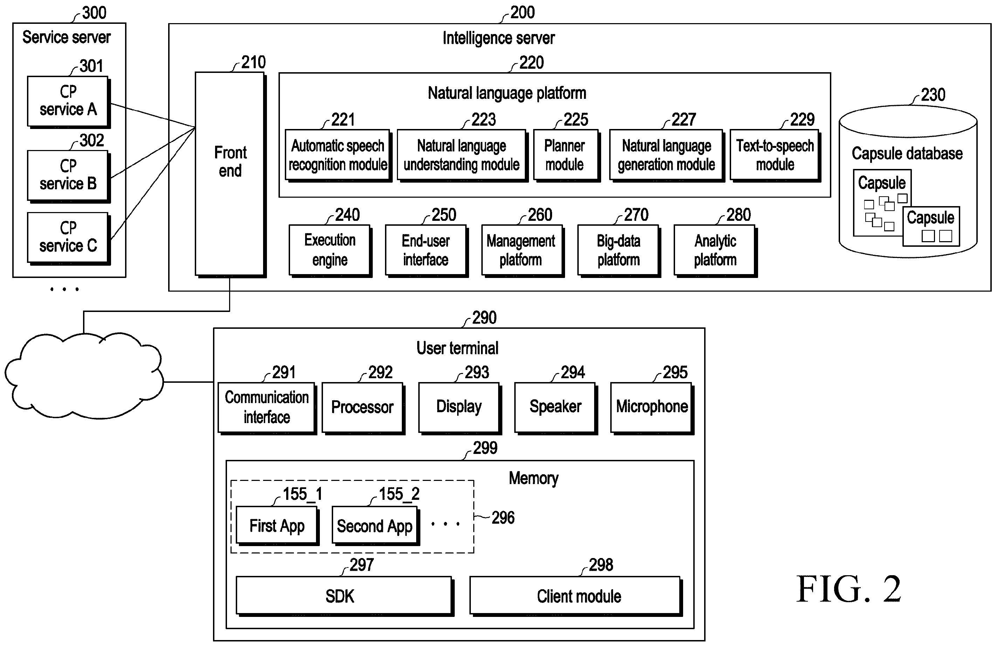

FIG. 2 is a block diagram illustrating an integrated intelligence system according to an embodiment.

Referring to FIG. 2, the integrated intelligent system according to an embodiment may include a user terminal 290, an intelligent server 200, and a service server 300.

The user terminal 290 according to an embodiment may be a terminal device (or electronic device) capable of being connected to the Internet, and may be, for example, a mobile phone, a smartphone, a personal digital assistant (PDA), a laptop computer, a TV, white goods, a wearable device, HMD, or smart speaker.

According to the illustrated embodiment, the user terminal 290 may include a communication interface 291, a microphone 295, a speaker 294, a display 293, a memory 299, or a processor 292. The elements listed above may be operatively or electrically connected to each other.

The communication interface 291 according to an embodiment may be configured to be connected to an external device so as to transmit/receive data. The microphone 295 according to an embodiment may receive sound (e.g., a user utterance) and convert the received sound into an electrical signal. The speaker 294 according to an embodiment may output the electrical signal as a sound (e.g., speech). The display 293 according to an embodiment may be configured to display an image or video. The display 293 according to an embodiment may also display a graphical user interface (GUI) of an app (or application program) being executed.

The memory 299 according to an embodiment may store a client module 298, a software development kit (SDK) 297, and a plurality of apps 296. The client module 298 and the SDK 297 may constitute a framework (or a solution program) for performing general-purposed functions. In addition, the client module 298 or the SDK 297 may constitute a framework for processing speech input.

The plurality of apps 296 of the memory 299 according to an embodiment may be a program for performing designated functions. According to an embodiment, the plurality of apps 296 may include a first app 296_1 and a second app 296_2. According to an embodiment, each of the plurality of apps 296 may include plurality of actions for performing a designated function. For example, the apps may include an alarm app, a message app, and/or a schedule app. According to an embodiment, the plurality of apps 296 may be executed by the processor 292 to sequentially execute at least part of the plurality of actions.

The processor 292 according to an embodiment may control an overall operation of the user terminal 290. For example, the processor 292 may be electrically connected to the communication interface 291, the microphone 295, the speaker 294, and the display 293 to perform a designated action.

The processor 292 according to an embodiment may also execute a program stored in the memory 299 to perform a designated function. For example, the processor 292 may execute at least one of the client module 298 or the SDK 297 to perform the following action for processing a speech input. The processor 292 may control the action of the plurality of apps 296 through the SDK 297, for example. The following actions described as actions of the client module 298 or the SDK 297 may be actions performed by the execution of the processor 292.

The client module 298 according to an embodiment may receive speech input. For example, the client module 298 may receive a speech signal corresponding to a user utterance sensed through the microphone 295. The client module 298 may transmit the received speech input to the intelligent server 200. The client module 298 may transmit state information of the user terminal 290 to the intelligent server 200 along with the received speech input. The state information may be, for example, execution state information of an app.

The client module 298 according to an embodiment may receive a result corresponding to the received speech input. For example, the client module 298 may receive a result corresponding to the received speech input in case that the intelligent server 200 is capable of calculating the result corresponding to the received speech input. The client module 298 may display the received result on the display 293.

The client module 298 according to an embodiment may receive a plan corresponding to the received speech input. The client module 298 may display, on the display 293, a result obtained by executing plurality of actions of the app according to a plan. The client module 298 may sequentially display, for example, the execution results of plurality of actions on the display 293. For another example, the user terminal 290 may display, on the display 293, only a part of results obtained by executing plurality of actions (e.g., the result of the last action).

According to an embodiment, the client module 298 may receive, from the intelligent server 200, a request for obtaining information required to calculate a result corresponding to a speech input. According to an embodiment, the client module 298 may transmit the required information to the intelligent server 200 in response to the request.

The client module 298 according to an embodiment may transmit information about a result obtained by executing plurality of actions according to a plan to the intelligent server 200. The intelligent server 200 may identify that the received speech input has been correctly processed, by using the result information.

The client module 298 according to an embodiment may include a speech recognition module. According to an embodiment, the client module 298 may recognize a speech input to perform a limited function, through the speech recognition module. For example, the client module 298 may execute an intelligent app that processes speech input for performing an organic action, via a designated input (e.g., wake up!).

The intelligent server 200 according to an embodiment may receive information associated with a user's speech input from the user terminal 290 through a communication network. According to an embodiment, the intelligent server 200 may change data associated with the received speech input to text data. According to an embodiment, the intelligent server 200 may generate a plan for performing a task corresponding to a user speech input based on the text data.

According to an embodiment, the plan may be generated by an artificial intelligence (AI) system. The AI system may be a rule-based system, or may be a neural network-based system (e.g., a feedforward neural network (FNN) or a recurrent neural network (RNN)). Alternatively, the AI system may be a combination of the above-described systems or an AI system different from the above-described system. According to an embodiment, the plan may be selected from a set of predefined plans, or may be generated in real time in response to a user request. For example, The AI system may select at least one of plurality of predefined plans.

An embodiment of the intelligent server 200 may transmit a result according to the generated plan to the user terminal 290, or may transmit the generated plan to the user terminal 290. According to an embodiment, the user terminal 290 may display the result according to the plan on the display 293. According to an embodiment, the user terminal 290 may display on the display 293 a result obtained by executing the action according to the plan.

The intelligence server 200 according to an embodiment may include a front end 210, a natural language platform 220, a capsule database (DB) 230, an execution engine 240, an end UI 250, a management platform 260, a big data platform 270, or an analytic platform 280.

According to an embodiment, the front end 210 may receive a speech input received from the user terminal 290. The front end 210 may transmit a response corresponding to the speech input.

According to an embodiment, the natural language platform 220 may include an automatic speech recognition (ASR) module 221, a natural language understanding module (NLU module) 223, a planner module 225, a natural language generator module (NLG module) 227, or a text to speech module (TTS module) 229.

According to an embodiment, the ASR module 221 may convert the speech input received from the user terminal 290 into text data. According to an embodiment, the NLU module 223 may grasp the intent of the user by using the text data of the speech input. For example, the NLU module 223 may grasp the intent of the user by performing syntactic analysis or semantic analysis. According to an embodiment, the NLU module 223 may grasp the meaning of words extracted from the speech input by using linguistic features (e.g., syntactic elements), such as morphemes or phrases, and may determine the intent of the user by matching the grasped meaning of the words to the intent.

According to an embodiment, the planner module 225 may generate the plan by using the intent and a parameter, which are determined by the NLU module 223. According to an embodiment, the planner module 225 may determine a plurality of domains required to perform a task, based on the determined intent. The planner module 225 may determine a plurality of actions included in each of the plurality of domains determined based on the intent. According to an embodiment, the planner module 225 may determine a parameter required to perform the determined plurality of actions or a result value output by the execution of the plurality of actions. The parameter and the result value may be defined as a concept of the designated form (or class). Accordingly, the plan may include the plurality of actions and a plurality of concepts determined by the intent of the user. The planner module 225 may determine the relationship between the plurality of actions and the plurality of concepts stepwise (or hierarchically). For example, the planner module 225 may determine the execution sequence of the plurality of actions, which are determined based on the user's intent, based on the plurality of concepts. In other words, the planner module 225 may determine the execution sequence of the plurality of actions, based on the parameters required to perform the plurality of actions and the result output by the execution of the plurality of actions. Accordingly, the planner module 225 may generate a plan including connection information (e.g., ontology) between a plurality of actions and a plurality of concepts. The planner module 225 may generate the plan, by using the information stored in the capsule DB 230 that stores a set of relationships between concepts and actions.

According to an embodiment, the NLG module 227 may change the designated information into information in the text form. The information changed to the text form may be in the form of a natural language utterance. The TTS module 229 according to an embodiment may change information in the text form to information in a speech form.

According to an embodiment, all or part of the functions of the natural language platform 220 may be also implemented in the user terminal 290.

The capsule DB 230 may store information about the relationship between the actions and the plurality of concepts corresponding to a plurality of domains. According to an embodiment, the capsule may include plurality of action objects (or action information) and concept objects (or concept information) included in the plan. According to an embodiment, the capsule DB 230 may store the plurality of capsules in the form of a concept action network (CAN). According to an embodiment, the plurality of capsules may be stored in a function registry included in the capsule DB 230.

The capsule DB 230 may include a strategy registry that stores strategy information required to determine a plan corresponding to a speech input. The strategy information may include reference information for determining a single plan in case that there are a plurality of plans corresponding to the speech input. According to an embodiment, the capsule DB 230 may include a follow-up registry that stores the information of the follow-up action for suggesting a follow-up action to the user in the designated context. For example, the follow-up action may include a follow-up utterance. According to an embodiment, the capsule DB 230 may include a layout registry for storing layout information of the information output via the user terminal 290. According to an embodiment, the capsule DB 230 may include a vocabulary registry that stores vocabulary information included in the capsule information. According to an embodiment, the capsule DB 230 may include a dialog registry that stores information about dialog (or interaction) with the user. The capsule DB 230 may update the object stored via a developer tool. For example, the developer tool may include a function editor for updating an action object or a concept object. The developer tool may include a vocabulary editor for updating the vocabulary. The developer tool may include a strategy editor that generates and registers a strategy for determining the plan. The developer tool may include a dialog editor that generates a dialog with the user. The developer tool may include a follow-up editor capable of activating a follow-up target and editing the follow-up utterance for providing a hint. The follow-up target may be determined based on the currently configured target, the preference of the user, or environment condition. The capsule DB 230 according to an embodiment may be also implemented in the user terminal 290.

The execution engine 240 according to an embodiment may calculate the result, using the generated plan. The end UI 250 may transmit the calculated result to the user terminal 290. Accordingly, the user terminal 290 may receive the result and provide the user with the received result. The management platform 260 according to an embodiment may manage information used by the intelligence server 200. According to an embodiment, the big data platform 270 may collect data of the user. According to an embodiment, the analytic platform 280 may manage the quality of service (QoS) of the intelligence server 200. For example, the analytic platform 280 may manage the element and processing speed (or efficiency) of the intelligence server 200.

According to an embodiment, the service server 300 may provide the user terminal 290 with a designated service (e.g., food order or hotel reservation). According to an embodiment, the service server 300 may be a server operated by a third party. According to an embodiment, the service server 300 may provide the intelligence server 200 with information for generating a plan corresponding to the received speech input. The provided information may be stored in the capsule DB 230. Furthermore, the service server 300 may provide the intelligence server 200 with result information according to the plan.

In the above-described integrated intelligence system 10, the user terminal 290 may provide the user with various intelligent services in response to a user input. The user input may include, for example, an input through a physical button, a touch input, or a speech input.

According to an embodiment, the user terminal 290 may provide a speech recognition service via an intelligence app (or speech recognition app) stored therein. In this case, for example, the user terminal 290 may recognize the user utterance or the speech input received via the microphone and may provide the user with a service corresponding to the recognized speech input.

According to an embodiment, the user terminal 290 may perform a designated action, based on the received speech input, independently, or together with the intelligence server 200 and/or the service server 300. For example, the user terminal 290 may execute an app corresponding to the received speech input, and may perform the designated action via the executed app.

According to an embodiment, when the user terminal 290 provides a service together with the intelligence server 200 and/or the service server 300, the user terminal 290 may detect a user utterance by using the microphone 295 and may generate a signal (or speech data) corresponding to the detected user utterance. The user terminal 290 may transmit the speech data to the intelligence server 200, using the communication interface 291.

According to an embodiment, the intelligence server 200 may generate a plan for performing a task corresponding to the speech input or the result of performing an action depending on the plan, as the response to the speech input received from the user terminal 290. For example, the plan may include the plurality of actions for performing the task corresponding to the speech input of the user and the plurality of concepts associated with the plurality of actions. The concept may define a parameter to be input for the execution of the plurality of actions or a result value output by the execution of the plurality of actions. The plan may include relationship information between the plurality of actions and the plurality of concepts.

According to an embodiment, the user terminal 290 may receive the response, using the communication interface 291. The user terminal 290 may output the speech signal generated in the user terminal 290 to the outside by using the speaker 294, or may output an image generated in the user terminal 290 to the outside by using the display 293.

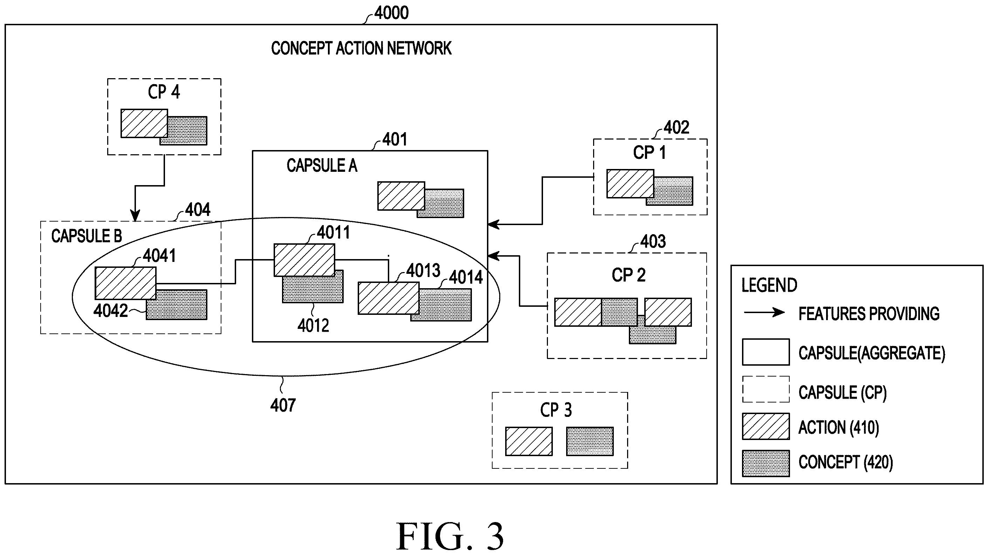

FIG. 3 is a diagram 400 illustrating a form in which relationship information between a concept and an action is stored in a database according to an embodiment.

The capsule database (e.g., a capsule DB 230) of the intelligence server 200 may store a capsule in the form of a concept action network (CAN). The capsule database may store an action for processing a task corresponding to a user's speech input and a parameter necessary for the action, in the concept action network (CAN) form.

The capsule database may store a plurality of capsules (capsule A 401 and capsule B 404) respectively corresponding to a plurality of domains (e.g., applications). According to an embodiment, a single capsule (e.g., the capsule A 401) may correspond to one domain (e.g., a location (geo) or an application). In addition, at least one service provider (e.g., CP1 402 or CP2 403) for performing the function for the domain associated with the capsule may correspond to the single capsule. According to an embodiment, the single capsule may include one or more actions 410 and one or more concepts 420 for performing a designated function.

The natural language platform 220 may generate a plan for performing a task corresponding to the received speech input, by using the capsule stored in the capsule database. For example, the planner module 225 of the natural language platform may generate a plan by using the capsule stored in the capsule database. For example, the planner module 225 may generate a plan 407 by using actions 4011 and 4013 and concepts 4012 and 4014 of the capsule A 401 and an action 4041 and a concept 4042 of the capsule B 404.

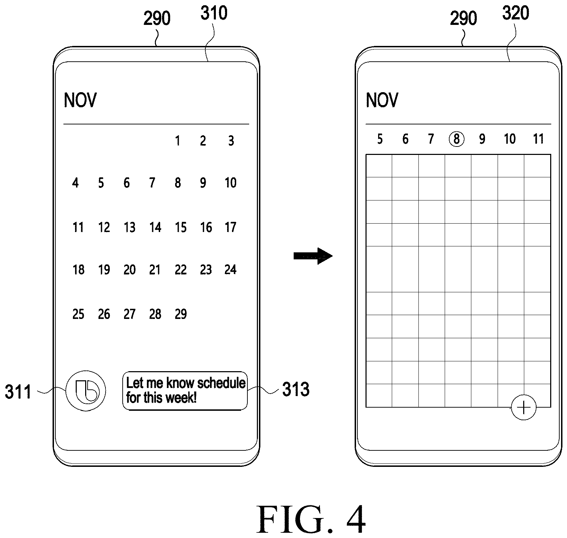

FIG. 4 illustrates a user terminal displaying a screen in which a received speech input is processed through an intelligent app according to an embodiment.

The user terminal 290 may execute an intelligence app to process a user input through the intelligence server 200.

According to an embodiment, in screen 310, when recognizing a designated speech input (e.g., wake up!) or receiving an input via a hardware key (e.g., a dedicated hardware key), the user terminal 290 may execute an intelligence app for processing a speech input. For example, the user terminal 290 may execute an intelligence app in a state where a schedule app is being executed. According to an embodiment, the user terminal 290 may display an object (e.g., an icon) 311 corresponding to the intelligence app, on the display 293. According to an embodiment, the user terminal 290 may receive a speech input by a user utterance. For example, the user terminal 290 may receive a speech input saying that "Let me know the schedule of this week!". According to an embodiment, the user terminal 290 may display a user interface (UI) 313 (e.g., an input window) of an intelligence app, in which text data of the received speech input is displayed, on a display.

According to an embodiment, in screen 320, the user terminal 290 may display the result corresponding to the received speech input, on the display. For example, the user terminal 290 may receive the plan corresponding to the received user input and may display 'the schedule of this week' on the display depending on the plan.

In the following description, the components easy to understand from the description of the above embodiments are denoted with or without the same reference numerals and their detailed description may be skipped. According to an embodiment of the disclosure, an electronic device 101 is implemented by selectively combining configurations of different embodiments, and the configuration of one embodiment may be replaced by the configuration of another embodiment. However, it is noted that the present invention is not limited to a specific drawing or embodiment.

Meanwhile, the speech recognition technology is a technology for recognizing a person's speech and identifying the content of the linguistic meaning in the recognized speech of the person, and an electronic device providing a speech recognition service may receive a control command through the user's speech. In order to execute the function of the electronic device by the user speech, the electronic device may recognize the user's utterance.

In this case, the electronic device may recognize not only the speech signal for the user utterance but also various sounds generated in the surrounding environment. To increase the accuracy of speech recognition, there are being researched and developed methods for removing noise included in the speech signal input in the pre-processing step or adjusting the signal magnitude. Further, there is a wake on voice (WoV) technology in which the user informs the electronic device when to start the speech recognition operation. For example, if the user utters a specific start command (or wake word, wakeup word, predetermined word, or first command - where any of these terms may be used in place of specific start command from hereon) (e.g., 'Hi Bixby'), the speech recognition function of the electronic device is activate in response to the specific start command. For example, wake word recognition is performed by a low-power processor separated from the processor that performs the speech recognition function. For example, wake word recognition is performed by a processor currently operating in a low-power mode, and after the wake word is detected, it is performed by a processor operating in a high-performance mode. When the processor operates in the low-power mode, wake word recognition may be performed, and after the wake word is detected, the processor may switch to the high-performance mode to perform operations after wake word detection.

However, when speech recognition is performed for a period when there is no user utterance after the wake word, unexpected text may be output due to ambient noise. For example, if a user accidentally utters the wake word or the electronics device erroneously detects utterance of the wake word, the user will not intend to provide further utterance (e.g. instructions, commands etc.) to the electronic device but the electronic device may detect background conversation (e.g., utterances of the user directed to another person to another entity) due to the speech recognition function having been activated. This may unnecessarily expend battery of the electronic device, and/or lead to performing an operation which the user does not intend/want to be performed. Therefore, the electronic device needs to perform speech recognition by focusing on the speech of the user who utters the wake word after the wake word. After recognizing the wake word, the electronic device may output (or reproduce) a predetermined notification sound (hereafter, this may also be referred to as a prompt, an alert, or a sound indication) to lead to (e.g. prompt or request) the user's utterance. Unlike the speech actually uttered by the user, the predetermined notification sound may be a playback sound output through a speaker to lead to the user's additional utterance on the electronic device. For example, the predetermined notification sound is a special speech obtained in advance or a speech obtained by synthesizing text predesignated by the user through text-to-speech (TTS) (hereinafter, referred to as a 'TTS speech'). The notification sound output (or reproduced) through the speaker of the electronic device after the wake word is input through the microphone in the electronic device may be referred to as a "verbal listening sound (VLS)".

When a speech signal according to the user's utterance is not input within a predetermined time after the wake word is recognized, the electronic device may output a notification sound to lead to the user's additional utterance. If the speech signal according to the user's additional utterance is input after outputting the notification sound, the electronic device may output the speech recognition result by removing the pattern corresponding to the notification sound and the wake word. However, when the sound signal according to the user's additional utterance is input while at least partially overlapping the notification sound, the sound signal itself may be distorted due to the overlap between the notification sound and the user's utterance, causing an error in speech recognition. As described above, since the notification sound may affect speech recognition, it is necessary to remove the notification sound in the pre-processing step before speech recognition.

According to an embodiment, there is provided an electronic device for processing a speech signal including a notification sound in a pre-processing step to further increase the speech recognition rate, an operation method thereof, and a storage medium.

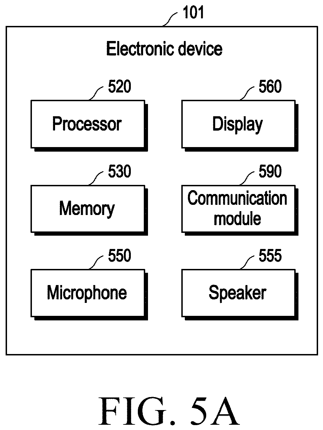

FIG. 5A is a block diagram illustrating an internal configuration of an electronic device according to an embodiment.

Referring to FIG. 5A, an electronic device 101 (e.g., the electronic device 101 of FIG. 1 or the user equipment 290 of FIG. 2) according to an embodiment includes at least one processor 520 (e.g., the processor 120 of FIG. 1 or the processor 292 of FIG. 2) and a microphone 550 (e.g., the input module 150 of FIG. 1 or the microphone 295 of FIG. 2). The electronic device 101 according to an embodiment further includes memory 530 (e.g., the memory 130 of FIG. 1 or the memory 299 of FIG. 2), a display 560 (e.g., the display module 160 of FIG. 1 or the display 293 of FIG. 2), a speaker 555 (e.g., the sound output module 155 of FIG. 1 or the speaker 294 of FIG. 2), and/or a communication module 590 (e.g., the communication module 190 of FIG. 1 or the communication interface 291 of FIG. 2). Here, not all components illustrated in FIG. 5A are essential components of the electronic device 101, and the electronic device 101 may be implemented by more or fewer components than those illustrated in FIG. 5A.

The processor 520 may control the overall operation of the electronic device 101 having the speech recognition function. For example, the processor 520 may be implemented as an application processor (AP).

The processor 520 may receive a speech signal (e.g. a signal indicative of speech) uttered by the user through the microphone 550. The processor 520 may perform speech recognition on the user speech (e.g. the user speech being included in (i.e. obtainable from) the speech signal), and may output the speech recognition result, for example through the display 560 or the speaker 555. The received speech signal may include noise (e.g. environmental or ambient noise) as well as the speech according to the user utterance. For example, the received speech signal includes a start command (or a wake word) for speech recognition. The processor 520 may recognize the wake word included in the received speech signal. According to an embodiment, the wake word recognition includes speaker recognition (e.g. speaker verification or speaker identification; that is, the process of recognizing the wake word includes verifying the speaker or identifying the speaker, such as to check the speaker is authorized or authenticated to use the electronic device or speech recognition function). According to an embodiment, wake word recognition includes talker recognition (speaker verification, speaker identification).

Further, when outputting (or reproducing) a predetermined notification sound through the speaker 555 to lead to the user's utterance after recognizing the wake word, the processor 520 may receive (e.g. detect, obtain, acquire, or identify) a speech signal including a predetermined notification sound together with the user's utterance through the microphone 550 (e.g. the speech signal includes a first component corresponding to the user's utterance and a second component corresponding to the notification sound). Here, the predetermined notification sound may be guide information for leading to the user's additional utterance in response to the elapse of a predetermined time when there is no speech signal input within a predetermined time (or standby time) after the wake word. Since the wake word recognition may include speaker recognition, the speaker may be identified as being a specific speaker through speaker recognition. According to an embodiment, the standby time is set to be different for each of the different speakers (in other words, a standby time may be set for each of a plurality of users/speakers, where the standby times of two or more of these users can differ). Accordingly, the processor 520 may determine a standby time corresponding to the identified specific speaker, and may control to output a notification sound after the determined standby time. The predetermined notification sound may include a sound effect and/or the user's speech. A sound effect such as 'ding-dong' and/or a short word such as 'yes' may be used as the notification sound. The notification sound may also be replaced with a general or arbitrary speaker's speech, i.e., another tone, rather than the user's speech. Further, the short word such as "yes" has been described as an example of the notification sound, but the content (or text) of the notification sound may be variously defined in advance, and thus may not be limited thereto. For example, the speech recognition system supports a plurality of wake words, and may output a different tone or a different notification sound according to each wake word.

As described above, the speech recognition rate may decrease due to elements other than the user utterance, e.g., noise as well as the notification sound (e.g. the speech signal can also include a third component corresponding to ambient/environmental noise).

Accordingly, the processor 520 may perform pre-processing on the speech signal received through the microphone 550 to increase the accuracy of speech recognition. The pre-processing is a series of signal processing performed before speech recognition, and may include an operation of removing (or filtering) signals other than the user utterance from the speech signal. According to an embodiment, the processor 520 may perform pre-processing to remove a predetermined notification sound corresponding to a signal other than the user utterance from the received speech signal. Here and hereafter, "removing" the predetermined notification sound from the received speech signal may be replaced by other various terms meaning that only the speech signal except for the notification sound is left, such as filtering (e.g., spectral subtraction, Wiener filter, MMSE, Kalman filter), deletion, separation, distinction, or extraction.

According to an embodiment, in the operation of removing (or filtering) the signal other than the user utterance in the pre-processing operation, the processor 520 removes the signal corresponding to the predetermined notification sound (e.g. the second component) from the received speech signal using the reference signal prestored in the memory 530. Here, the predetermined notification sound is for leading to the user's additional utterance when a speech signal according to the user's utterance is not input within a predetermined time after the wake sound, and may be a speech recorded (or stored) by the user or a predetermined special speech. In order to more clearly identify the notification sound included in the speech signal when the speech signal is input, the predetermined notification sound is obtained in advance, and the notification sound or related information may be obtained in the storing (or registering) step. For example, in the storing (or registering) step, a feature or identification information (e.g., ID) for the notification sound is mapped to the notification sound and be stored and managed. When the notification sound is stored, the feature or identification information about the notification sound is stored together, so that a corresponding notification sound may be identified even if there are a plurality of (or types of) notification sounds. Here, the predetermined notification sound used to remove the notification sound from the speech signal may be referred to as a reference signal, notification sound information, or VLS data. In the following description, it should be understood that the reference signal indicates a predetermined notification sound used to remove (or filter) the notification sound reproduced from the speech signal in the electronic device 101.

Operations performed by the processor 520 to remove a notification sound from a speech signal are described below. According to an embodiment, the processor 520 obtains the speech signal from which the notification sound is removed through the pre-processing operation.

According to an embodiment, the wake word recognition operation is performed by the electronic device 101 (e.g., the electronic device 101 of FIG. 1 or the user equipment 290 of FIG. 2). In the following description, the case where the notification sound removal operation is performed by the electronic device 101 is described as an example, but the notification sound removal operation may be performed by a server (e.g., the intelligent server 200 and/or the service server 300 of FIG. 2).

The processor 520 may perform speech recognition on the obtained speech signal. The speech recognition processing on the user's utterance according to an embodiment may partially include automatic speech recognition (ASR) and/or natural language understanding (NLU) processing. For example, the ASR module (or ASR engine) is used to convert the user's speech into text, and the NLU module (or NLU engine) may extract the meaning of the user utterance from the recognition result of the ASR module.

According to an embodiment, the speech recognition processing is processed by a speech recognition module (or a speech recognition engine) stored in the memory 530 of the electronic device 101, or is processed by a server (e.g., the intelligent server 200 and/or the service server 300 of FIG. 2). Accordingly, the processor 520 may transmit the speech uttered by the user to the server through the communication module 590 or may transmit the speech recognition result to the server. For example, the processor 520 transmits the notification sound-removed speech signal to the server or may transmit the speech recognition result to the server.

As described above, the operation of the processor 520 for increasing the speech recognition rate may be largely divided into an operation of storing (or registering) a reference signal or related information (or features) (e.g., a spectrogram or mel-frequency cepstral coefficients (MFCC)) used to remove the notification sound, and a filtering operation of removing the notification sound using the stored reference signal. As described above, the operation of the processor 520 to increase the speech recognition rate largely involves the use of reference signals or related information (or features) (e.g., spectrogram, MFCC (mel-frequency cepstral coefficients) used to remove notification sounds.)) and may be divided into an operation to store (or register) and a filtering operation to remove the notification sound based on the stored reference signal.

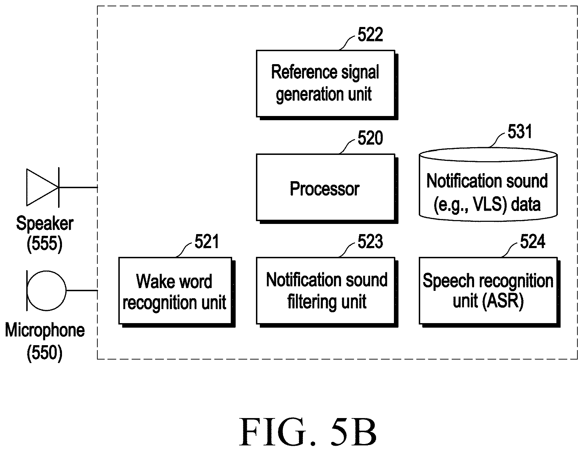

According to an embodiment, the processor 520 performs an operation of storing (or registering) the reference signal and a filtering operation for removing a notification sound, but these operations may be performed by a plurality of processors. Further, as illustrated in FIG. 5B, the processor 520 may be connected to modules for processing a speech signal and a module for speech recognition. FIG. 5B is a block diagram illustrating a detailed configuration of an electronic device for processing a speech signal according to an embodiment.

Referring to FIG. 5B, a wake word recognition unit (or recognition module) 521 may perform recognition on a wake word, which is a command indicating to start speech recognition, from a speech signal received through the microphone 550. When the wake word is recognized, the wake word recognition unit 521 may lead the speech recognition unit 524 to perform speech recognition on the speech signal input after the wake word. The speech signal transferred to the speech recognition unit 524 may be pre-processed and transferred for more accurate speech recognition. As an example of the pre-processing operation, an adaptive gain control (AGC) and/or noise suppression (NS) operation may be included. Meanwhile, a command according to the wake word recognized by the wake word recognition unit 521 may be implemented in a processor (e.g., audio codec (DSP)) different from the speech recognition unit 524, or may be implemented in a processor (e.g., AP).

A notification sound filtering unit (or filtering module) 523 may remove the notification sound from the speech signal input after the wake word using the stored notification sound (e.g., VLS) data 531. Here, removing the notification sound from the speech signal input after the wake word should be understood as removing (e.g. filtering) the notification sound signal corresponding to the output preset notification sound from the speech signal when the preset notification sound output through the speaker 555 is received together with the speech signal through the microphone 550 (e.g. when the speech signal comprises the present notification sound output through the speaker 555 and the speech from the user, where there is at least some temporal overlap between the two). The notification sound (e.g., VLS) data 531 may be a reference signal used for filtering the notification sound. For example, the notification sound (e.g., VLS) data 531 is a waveform signal of the reference signal or a feature vector (e.g., a spectrogram or mel-frequency cepstral coefficients (MFCC)) representing the waveform in a frequency form. According to an embodiment, the notification sound (e.g., VLS) data 531 is obtained in the same manner as the feature vector used by the speech recognition unit 524. For example, the reference signal is a signal recorded when the notification sound is output through the speaker 555 or a signal stored by additionally processing the recorded signal.

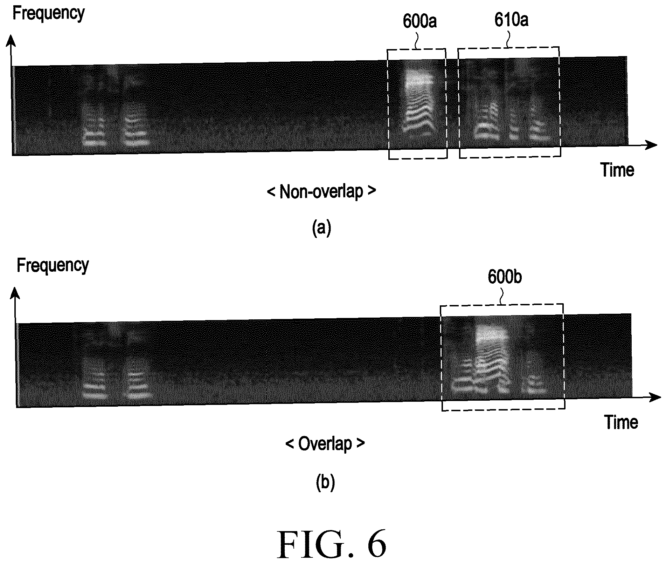

For example, when the wake word is detected from a first speech signal of a first period, the output of the notification sound is determined according to whether the user additionally utters within a predetermined time (or a designated standby time) (e.g., about 1 to 5 seconds). The case where the speech signal is not detected from the speech signal input for a predetermined time may correspond to, e.g., the case where there is no additional user utterance within the predetermined time. Accordingly, when there is no additional utterance, a notification sound for leading to the user's additional utterance is output. Accordingly, a second speech signal of a second period following the first period may include a section (e.g., a silent section) in which there is no user utterance and a notification sound for leading to the user's additional utterance. According to an embodiment, the first period and the second period do not overlap each other, and may be spaced apart from each other at a predetermined time interval. A notification sound filtering unit 523 may perform an operation of removing a notification sound from the second speech signal of the second period, which is described in detail with reference to FIG. 6.

FIG. 6 is a view illustrating example input signals when a notification sound overlaps, and does not overlap, a user speech, according to an embodiment.

FIG. 6(a) illustrates a waveform of a speech signal input through a microphone (e.g., the microphone 550 of FIGS. 5A and 5B), and illustrates an example in which a portion 600a corresponding to a notification sound after a wake word does not overlap with a user speech portion 610a. FIG. 6(b) illustrates a portion 600b in which a notification sound after a wake word and a user speech overlap each other. In the waveform of the speech signal of FIG. 6, the x-axis may denote the time, and the y-axis may denote the frequency.

When a predetermined time elapses after the wake word, a predetermined notification sound is output through a speaker (e.g., the speaker 555 of FIGS. 5A and 5B) and input together with a speech signal according to the user's utterance through the microphone 550. However, the electronic device 101 may know that the notification sound is output and what speech (e.g., TTS speech type) the notification sound is output as, but does not know exactly how much the notification sound output through the speaker 555 is delayed and received through the microphone 550. Thus, the electronic device 101 may be in a state in which it does not know the exact position (e.g. point or period in time) of the notification sound in the received (or recorded) speech signal.

If the speech signal according to the user's additional utterance is input after outputting the notification sound as shown in FIG. 6(a), the electronic device 101 may output the speech recognition result by removing the pattern corresponding to the notification sound and the wake word. However, when the sound signal according to the user's additional utterance is input while at least partially overlapping the notification sound as shown in FIG. 6(b), the sound signal itself may be distorted due to the overlap between the notification sound and the user's utterance, causing an error in speech recognition.

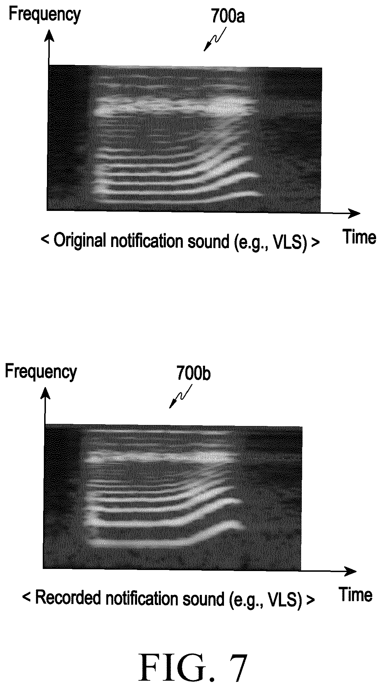

Further, as illustrated in FIG. 7, even if a high-quality original notification sound (e.g., VLS) 700a is output (or reproduced) through the speaker 555, the notification sound 700b received (or recorded) through the microphone 550 may be distorted due to various causes. FIG. 7 is a view illustrating an example signal corresponding to an original notification sound and a recorded notification sound according to an embodiment. For example, the signal features of the notification sound 700b may vary depending on the reproducibility of the speaker 555, the sound reception frequency feature of the microphone 550, or the sampling rate set during recording. If speech recognition is performed on a speech signal including a notification sound, the speech recognition rate may be relatively lowered.

Further, as illustrated in FIG. 6(a), when a speech signal according to the user's additional utterance is input after outputting the notification sound, the electronic device 101 may output a speech recognition result by removing a pattern corresponding to the notification sound, but due to a signal difference between the original notification sound 700a and the recorded notification sound 700b, it may be difficult to accurately remove the notification sound included in the speech signal even when the position of the notification sound is estimated.

Accordingly, in an embodiment, the electronic device 101 identifies the position of the notification sound in the speech signal after the wake word, and may use the reference signal to accurately remove the notification sound included in the speech signal.

Specifically, the notification sound filtering unit 523 may use the reference signal from the reference signal generating unit 522 to find the position of the notification sound from the second speech signal of the second period and remove the notification sound at the corresponding position. The reference signal generated by the reference signal generation unit 522 may be a signal used for removing (or filtering) a notification sound, and may be a notification sound generated in advance using TTS selected by the user and stored (or registered) in the notification sound (e.g., VLS) data (or data module or database) 531.

The reference signal generation unit 522 may convert the notification text (for example, in a case where the predetermined notification sound is a special speech obtained in advance or a speech obtained by synthesizing text predesignated by the user through TTS) into a notification sound based on the speech synthesis model, and may output (or reproduce) the converted notification sound through the speaker 555. In an embodiment, the speech synthesis model may be selected by a user input from among a plurality of speech synthesis models, or may be newly generated by a user input. The reference signal generation unit 522 may obtain a reference signal corresponding to the output notification sound input through the microphone 550, and store the obtained reference signal in the memory 530 (e.g., the notification sound (e.g., VLS) data 531).

The processor 520 may control operations and signals between the above-described components (or modules). According to an embodiment, the processor 520 controls each of the components 521, 522, 523, 524, and 531 performing the operation for removing the notification sound from the speech signal including the notification sound, or performs at least some operations of each of the components 521, 522, 523, 524, and 531. The processor 520 may control to determine whether to remove (or filter) the notification sound after recognizing the wake word, and provide the speech signal obtained by removing (or filtering) the notification sound to the speech recognition unit (ASR) 524, thereby performing speech recognition.

The speech recognition unit (ASR) 524 may generate a feature vector by analyzing the input notification sound-removed speech signal, generate a text corresponding to the speech signal through various statistical algorithms (e.g., a hidden Markov model (HMM) or an artificial neural net), or perform a designated function based on the text. Here, some operations of the ASR 524 may be performed by an external server (e.g., the intelligent server 200 and/or the service server 300 of FIG. 2). In an embodiment, the notification sound removal is processed on the feature vector (or in the domain) and is transferred to the speech recognition unit (ASR) 524 without generating a duplicate feature vector.

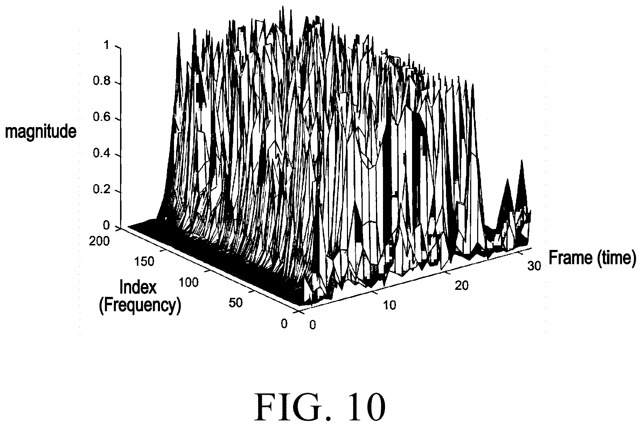

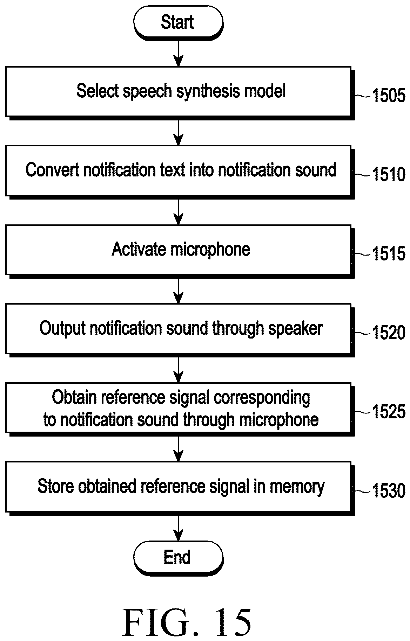

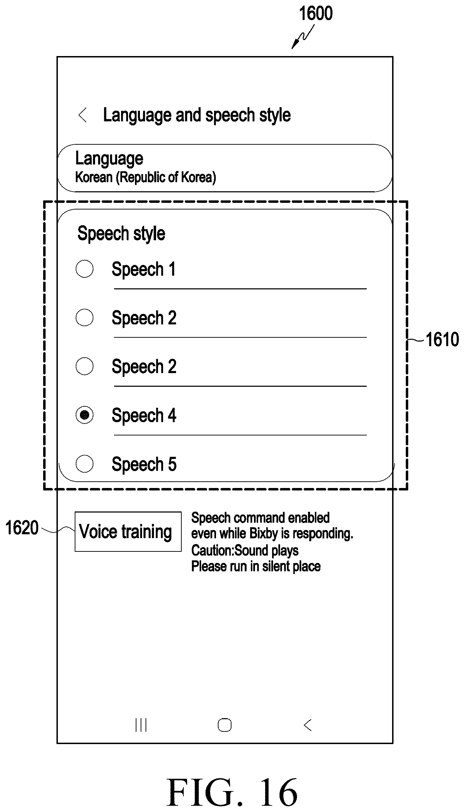

Meanwhile, the operation of removing (or filtering) a notification sound according to an embodiment is described below with reference to FIGS. 10 to 12, and the operation of generating a reference signal used to remove a notification sound is described below in detail with reference to FIGS. 15 and 16.

Meanwhile, at least some of the above-described operations of the electronic device 101 may be performed by the server of FIG. 2 (e.g., the intelligent server 200 and/or the service server 300 of FIG. 2).

According to an embodiment, operations other than the operation of outputting a notification sound and receiving a speech signal by the electronic device 101 are performed by the server. For example, the server identifies the position of the notification sound in the speech signal based on the stored reference signal, and performs speech recognition after removing the notification sound from the speech signal based on the identified position. Accordingly, at least some of the remaining operations other than the operation of receiving the speech signal by the electronic device 101 may be implemented to be performed by the electronic device 101 or the server, respectively.

According to an embodiment, an electronic device 101 comprises a microphone 295 or 550, at least one processor 120, 292, or 520 and memory (130, 299, or 530). According to an embodiment, the memory storing instructions that, when executed by the at least one processor, cause the electronic device to receive a first speech signal through the microphone during a first period; detect a wake word from the first speech signal; output a preset notification sound in response to detecting the wake word; detect a notification sound signal corresponding to the output notification sound from a second speech signal received through the microphone during a second period; and remove the notification sound signal from the second speech signal of the second period, based on a position of the detected notification sound signal. According to an embodiment, the instructions cause the electronic device to perform speech recognition on the second speech signal of the second period where the notification sound signal is removed.

According to an embodiment, the instructions cause the electronic device to determine a notification sound search range and identify the position of the notification sound signal by comparing a pre-stored reference signal and at least a portion of the second speech signal of the second period within the notification sound search range.

According to an embodiment, the electronic device 101 may further comprise a speaker 294 or 555. The instructions cause the electronic device to convert notification text into a notification sound based on any one of a plurality of speech synthesis models, output the converted notification sound through the speaker, obtain a reference signal corresponding to the output notification sound, input through the microphone, and store the obtained reference signal in the memory.

According to an embodiment, the instructions cause the electronic device to remove a signal corresponding to a designated section length of the reference signal from the position of the notification sound signal in the second speech signal, using the reference signal.

According to an embodiment, the instructions cause the electronic device to obtain a first feature vector of a frequency area corresponding to the reference signal, compare the first feature vector with a second feature vector of the frequency area corresponding to at least a portion of the second speech signal within the notification sound search range, and identify the position of the notification sound signal based on a result of the comparison.

According to an embodiment, the instructions cause the electronic device to determine a partial area including a user's speech feature of an entire frequency area corresponding to the reference signal and identify the position of the notification sound signal using a first feature vector of the partial area.

According to an embodiment, the instructions cause the electronic device to identify a position where a mean squared error (MSE) is a threshold or less as the position of the notification sound signal by comparing the first feature vector and the second feature vector.

According to an embodiment, the instructions cause the electronic device to identify a similarity between the first feature vector and a second feature vector of an area corresponding to a partial area of an entire frequency area corresponding to at least a portion of the second speech signal and identify a position where the similarity is a threshold or more as the position of the notification sound signal.

According to an embodiment, the instructions cause the electronic device to normalize the first feature vector and the second feature vector, identify the position of the notification sound signal by comparing the normalized first and second feature vectors, and remove the notification sound signal using a signal obtained by normalizing the reference signal based on the position of the notification sound signal.

According to an embodiment, the instructions cause the electronic device to determine the notification sound search range based on a time of outputting the notification sound.

According to an embodiment, the instructions cause the electronic device to generate text data by performing the speech recognition on the second speech signal of the second period where the notification sound signal is removed and perform a designated operation based on the text data.

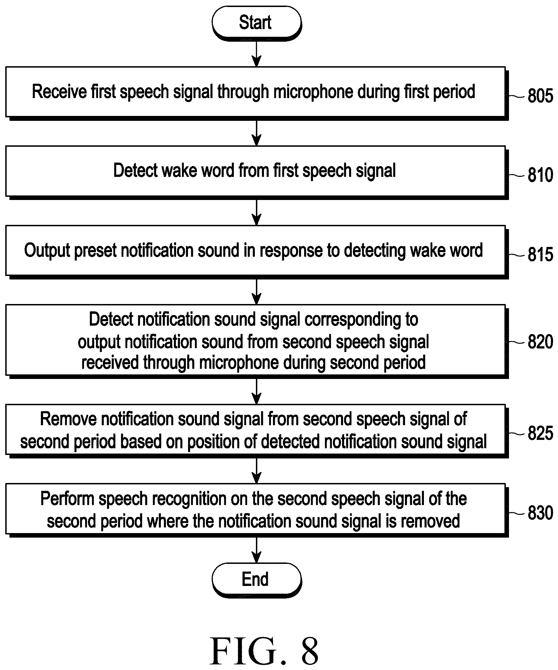

FIG. 8 is a flowchart illustrating operations for processing a speech signal by an electronic device according to an embodiment.

Referring to FIG. 8, the operation method may include operations 805 to 830. Each operation of the operation method of FIG. 8 may be performed by an electronic device (e.g., the electronic device 101 of FIGS. 1 to 5A), or at least one processor (e.g., the processor 120 of FIG. 1 or the processor 520 of FIGS. 5A and 5B) of the electronic device. In various embodiments, at least one of operations 805 to 830 is omitted, the order of some operations is changed, another operation is added, and/or at least two operations are performed in parallel. Further, in the following description, each operation of the operation method of FIG. 8 is described as being performed by the electronic device 101, but operations 805 to 815 may be performed by a client module (e.g., the client module 298 of FIG. 2), and operations 820 to 830 may be performed by an automatic speech recognition module (ASR module) (e.g., the automatic speech recognition module 221 of FIG. 2). For example, when a 'wake word' (e.g., 'Hi Bixby') and a 'command' (e.g., 'please...') are uttered without pause, the entire input speech signal may be transferred to the automatic speech recognition module to process the speech signal without separating the first period and the second period.

In operation 805, the electronic device 101 receives a first speech signal through the microphones 295 and 550 during the first period. In operation 810, the electronic device 101 detects the wake word from the first speech signal. According to an embodiment, the wake word is a wake-up command indicating when to start a speech recognition operation. For example, the wake word includes 'Hi Bixby'.

In operation 815, the electronic device 101 outputs a preset notification sound in response to detecting the wake word. The electronic device 101 may output the preset notification sound after waiting for a predetermined time after detecting the wake word. For example, the electronic device 101 outputs a notification sound after waiting for a predetermined time regardless of whether an additional utterance is made. According to an embodiment, the electronic device 101 identifies whether there is the user's additional utterance within a predetermined time after the wake word is detected, and may output the notification sound based on the identification result. For example, speech recognition is performed using a second speech signal received for a predetermined time (or a designated standby time) (e.g., about 2.5 seconds) after the first period. For example, the predetermined time is set within a range of about 1 to 5 seconds.

As described above, when the user's additional utterance is not detected within a predetermined time in response to the elapse of the predetermined time or as a result of performing speech recognition, the electronic device 101 may output (or reproduce) a preset notification sound through the speaker 555. The preset notification sound is to lead or prompt the user to make an additional utterance, and through the output notification sound, the user may recognize that the speech recognition function is invoked and a speech command needs to be input by an utterance.

In an embodiment, the standby time for outputting the notification sound after detecting the wake word varies depending on user information. The user information may be a profile (e.g., information about the user, such as age and gender) of the user using the electronic device 101. For example, for elderly users, the standby time is set to be longer. The user information may be determined according to a result of speaker recognition performed when the wake word is detected.

In an embodiment, the output notification sound vary according to user information (e.g., age, gender), and an input context. For example, when the user is an elderly person, the electronic device 101 outputs a notification sound, e.g., "Yes, I'm listening." Otherwise, the electronic device 101 outputs a notification sound, e.g., "Yes." The number of times of outputting the notification sound may be two or more times, and the input context may be the order of outputting the notification sound. The first notification sound may be 'Yes', and the second notification sound may be 'I'm listening'. As described above, the reference signal used to remove the notification sound may be changed depending on the notification sounds output differently.

In operation 820, the electronic device 101 detects a notification sound signal corresponding to the output notification sound from the second speech signal received through the microphone during the second period. According to an embodiment, the electronic device 101 performs pre-processing on the second speech signal during the second period following the first period. For example, since the electronic device 101 outputs (or reproduces) the preset notification sound through the speaker 555 over the predetermined time, the electronic device 101 receives the second speech signal including the notification sound signal corresponding to the output notification sound through the microphone 550. According to an embodiment, when a speech signal by the user's utterance is input, the electronic device 101 processes the speech signal in separate frames in present time units (e.g. each frame corresponds to a set number of one or more time units). Accordingly, the first period and the second period may be predetermined times (e.g. set time periods or durations) in consideration of the frame unit. For example, the first period and the second period are periods each including the same number of frames.

In operation 825, the electronic device 101 removes the notification sound signal from the second speech signal of the second period, based on the detected position of the notification sound signal.

In operation 830, the electronic device 101 performs speech recognition on the second speech signal of the second period where the notification sound signal is removed. The notification sound signal-removed second speech signal of the second period may be a signal obtained by removing (or separating, filtering etc.) the signal corresponding to the actual notification sound using the reference signal from the position of the notification sound signal. The second speech signal of the second period distinguished from the notification sound may be a signal different from the second speech signal received through the microphone during the second period, and may be a notification sound signal-removed signal (or a third signal, where the speech signal is a second signal, and the signal including the wake word is a first signal).

Here, since the notification sound is output in response to the passage of a predetermined time (or standby time), the position of the notification sound signal corresponding to the output notification sound in the received second speech signal may be the same as the predetermined time (or standby time), but may correspond to a time after the predetermined time due to the signal difference between the notification sound output through the speaker 555 and the notification sound received through the microphone 550 (i.e. there will be a delay between output of the notification sound through the speaker 555 and reception/detection of the output notification sound by the microphone 550). Accordingly, the electronic device 101 may estimate the position of the notification sound signal in the received second speech signal based on the predetermined time (or standby time), and may identify the actual position of the notification sound signal in the received second speech signal based on the predetermined time (or standby time).

According to an embodiment, the electronic device 101 finds the position of the notification sound signal using the reference signal and removes the notification sound signal. The electronic device 101 may determine a notification sound search range based on the predetermined time (or standby time) and identify the position (or location) of the notification sound signal (i.e. in the second speech signal) by comparing a pre-stored reference signal and at least a portion of the second speech signal of the second period within the notification sound search range. In an embodiment, the position of the notification sound signal serving as the reference (or start position) for performing speech recognition on the second speech signal of the second period is considered (or estimated) to be the same as the predetermined time (or standby time). Accordingly, in order to identify (or find) the actual position of the notification sound signal, the electronic device 101 may determine a notification sound search range having a predetermined time (e.g., about 2.5 seconds) as a start point in the second speech signal of the second period on the time axis. For example, since the electronic device 101 may know whether the notification sound is output and the time when the notification sound is output, the electronic device 101 estimates the position of the notification sound signal in the second speech signal of the second period based on the predetermined time (or standby time) when the notification sound is output, and may identify the actual position of the notification sound signal in the second speech signal through a notification sound search.

Since the electronic device 101 may know in advance the predetermined length of the notification sound such as a sound effect or a short word, i.e., the designated section length of the reference signal, if it is able to know the actual position of the notification sound signal, i.e., the position where the notification sound signal starts, in the second speech signal of the second period, the electronic device 101 may remove as long a signal as the section length of the notification sound from the start position of the notification sound signal (i.e. a signal having the predetermined length or section length is removed from the second speech signal, beginning from the start position). Accordingly, the electronic device 101 may remove (e.g. filter, separate etc.) a signal corresponding to a designated section length of the reference signal from the position of the notification sound signal in the second speech signal, using the reference signal. Here, in removing the notification sound signal from the second speech signal, the entire signal corresponding to the section length of the reference signal is not removed, but rather, the second speech signal in which only a signal in substantially the same form as the reference signal is removed is left (i.e. a signal substantially corresponding to the second speech signal excluding the reference signal remains).

According to an embodiment (e.g. in the process of operation 820 or operation 825), the electronic device 101 obtains a first feature vector of a frequency area corresponding to the reference signal. The electronic device 101 may compare the first feature vector with a second feature vector of a frequency area corresponding to at least a portion of the second speech signal in the notification sound search range. The electronic device 101 may identify the position of the notification sound signal, based on the comparison result. According to an embodiment, the position of the notification sound signal corresponds to a position where the mean squared error (MSE) is less than or equal to a threshold as a result of comparing the first feature vector with the second feature vector. Further, the position of the notification sound signal may correspond to a position having a similarity greater than or equal to a threshold as a result of determining a similarity between two feature vectors.

According to an embodiment, the electronic device 101 converts a wave file representing the speech signal in a wave form into a spectrogram indicating a frequency form. In an example, the first feature vector of the frequency area corresponding to the reference signal is a mel-frequency cepstral coefficients (MFCC) value indicating the frequency feature. In another example, the first feature vector is a feature vector used for speech recognition (ASR) performed thereafter.

According to an embodiment, obtaining the first feature vector of the frequency area corresponding to the reference signal includes determining a partial area including the user's speech feature of the entire frequency area corresponding to the reference signal and obtaining the first feature vector of the partial area.

According to an embodiment, the electronic device 101 generates text data by performing the speech recognition on the notification sound signal-removed second speech signal of the second period. The electronic device 101 may perform a designated operation based on the text data.

Meanwhile, the operation of removing the notification sound (or the notification sound signal) has been described above, but the step of registering the reference signal used to remove the notification sound may be as follows. In the registration step, the electronic device 101 may convert the notification text into a notification sound, based on any one of the plurality of speech synthesis models. The electronic device 101 may output the converted notification sound through the speaker 555 of the electronic device 101. The electronic device 101 may obtain a reference signal corresponding to the output notification sound input through the microphone 550, and may store (or register) the obtained reference signal in the memory 530.

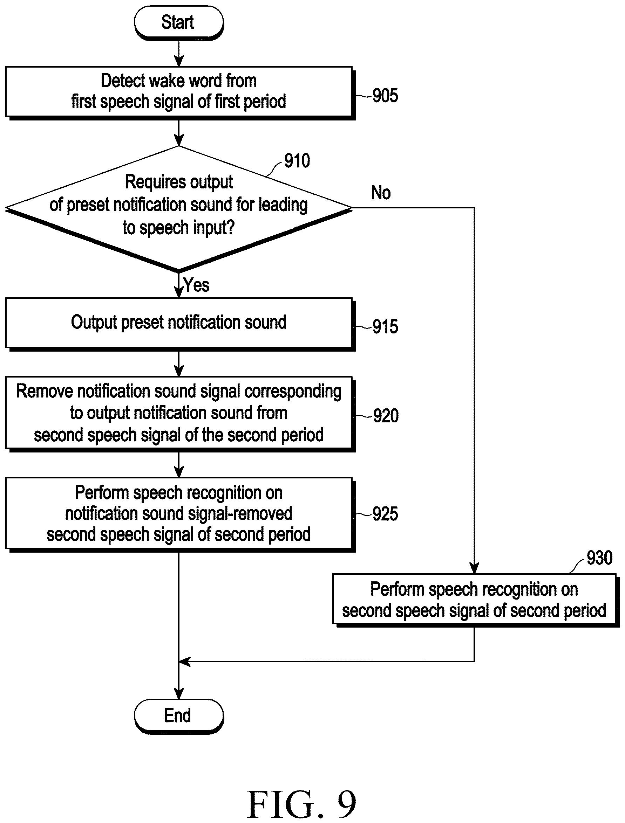

FIG. 9 is a flowchart illustrating detailed operations of an electronic device according to an embodiment.

Referring to FIG. 9, the operation method may include operations 905 to 930. Each operation of the operation method of FIG. 9 may be performed by an electronic device (e.g., the electronic device 101 of FIGS. 1 to 5A), at least one processor (e.g., the processor 120 of FIG. 1 or the processor 520 of FIGS. 5A and 5B) of the electronic device. In various embodiments, at least one of operations 905 to 930 is omitted, the order of some operations is changed, another operation is added, and/or at least two operations are performed in parallel. A description will be made with reference to FIGS. 10 to 13 to help understanding of the description in FIG. 9.

Further, in the following description, each operation of the operation method of FIG. 9 is described as being performed by the electronic device 101, but operation 905 may be performed by a client module (e.g., the client module 298 of FIG. 2) (or a DSP wake-up module), operations 910 and 915 may be performed by the client module, and/or operations 920 to 930 may be performed by an automatic speech recognition module (ASR module) (e.g., the automatic speech recognition module 221 of FIG. 2).

In operation 905, the electronic device 101 detects the wake word from the first speech signal of the first period. When the wake word is detected, in operation 910, the electronic device 101 may identify whether it is required to output a preset notification sound for leading to a speech input. For example, when the user's additional utterance is not detected within a predetermined time after the wake word is detected, it is identified that an output of a notification sound for leading to the user's additional utterance is required.

Accordingly, when it is required to output the preset notification sound, the electronic device 101 outputs the preset notification sound in operation 915. For example, the electronic device 101 outputs a preset notification sound through the speaker 555 in response to identifying that the user who uttered the wake word does not make an additional utterance within a predetermined time. In this case, the notification sound output through the speaker 555 may be received together with the speech according to the user's utterance through the microphone 550.

In operation 920, the electronic device 101 removes the notification sound signal corresponding to the output notification sound from the second speech signal of the second period. Here, the notification sound signal is a signal corresponding to the notification sound output through the speaker 555, and may be received together with the speech signal through the microphone 550. According to an embodiment, the electronic device 101 identifies the position of the notification sound signal in the second speech signal to remove the notification sound signal from the second speech signal of the second period.

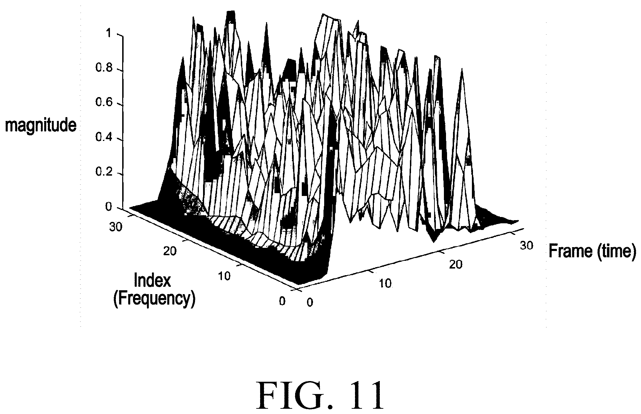

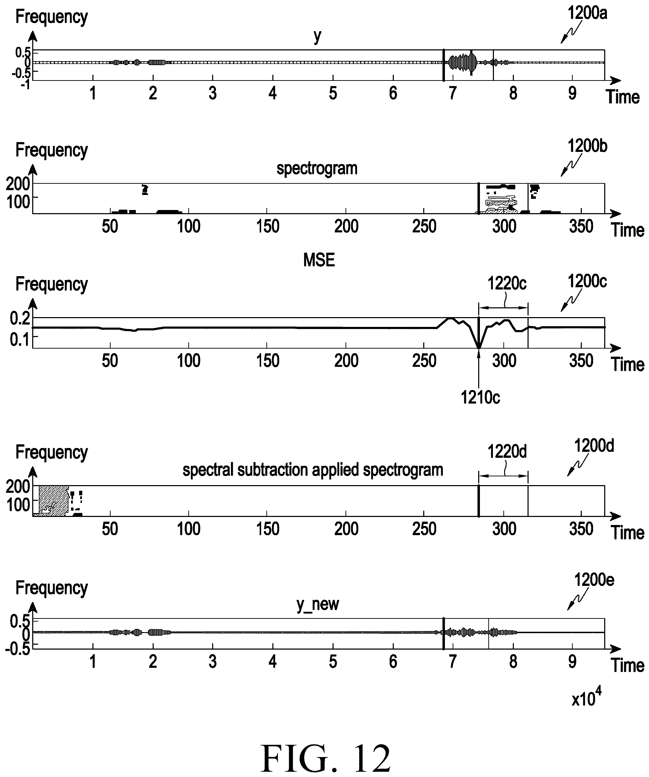

Here, the operation of removing (or filtering) a notification sound (or a notification sound signal) is described in detail with reference to FIGS. 10 to 12. FIG. 10 is a view illustrating an example spectrogram of a reference signal for notification sound removal according to an embodiment. FIG. 11 is a view illustrating an example spectrogram of a reference signal for notification sound search according to an embodiment. FIG. 12 is a view illustrating an example method for removing a notification sound from an input speech signal according to an embodiment.

FIG. 10 illustrates a spectrogram for an entire frequency band of a reference signal used to remove a notification sound from a speech signal. Here, the reference signal is, e.g., one obtained by reproducing a TTS sound source selected by the user and receiving (or recording) the same through the microphone, and may be a predetermined notification sound. The reference signal may be downloaded from the server or may be stored in a separate memory space in the electronic device 101. In this case, the reference signal may be a signal in the notification sound section, such as a sound effect, e.g., 'ding-dong' and/or a short word, e.g., "Yes," except for the silent section for a predetermined time after the wake word.

A reference signal represented in the form of a wave may be represented (e.g. be used or considered instead of) in a form of a spectrogram as shown in FIG. 10, so as to reduce the amount of computation using the feature being computed by the decoder of the speech recognition unit (ASR) (e.g., the speech recognition unit 524 of FIG. 5B) in the computation of the processor (e.g., the processor 520 of FIGS. 5A and 5B) (or the notification sound filtering unit 523 of FIG. 5B). For example, referring to FIG. 12, when the speech signal y is input in a waveform as shown in 1200a, if both the reference signal and the speech signal are expressed in a spectrogram, the result is shown as in 1200b.

Meanwhile, FIG. 10 illustrates the magnitude of the reference signal in the entire frequency band, which may be used to calculate the magnitude value for each band. For example, the processor 520 may extract the entire spectrogram standardized as a value between [0,1]. As such, the processor 520 may normalize the spectrogram of the reference signal to have a predetermined size. The processor 520 may determine a partial area including the user's speech feature of the entire frequency area corresponding to the reference signal. To that end, a predetermined number of bands (e.g., N bands) may be determined as bands of interest in the order from the largest standardized value among all frequency bands, and an index for each band may be extracted.

In FIG. 11, the spectrogram of the reference signal for searching for the notification sound is composed of some bands having a large frequency feature among all the frequency bands of FIG. 10, and these some areas may represent the user's speech feature (for example, the processor 520 identifies bands having a frequency feature of magnitude greater than or equal to a predetermined value). Since the voice frequency feature of one speaker has a harmonics band, it may be used to search for the position of the notification sound signal in the second speech signal of the second period using the band indicating the user's speech feature.

Accordingly, the processor 520 may use the feature vector of the partial area (or partial band) to search for the position of the notification sound signal in the speech signal. In this case, the processor 520 may search for the position of the notification sound signal using not only the first feature vector of the reference signal but also an area corresponding to the partial area of the entire frequency area corresponding to at least a portion of the second speech signal, i.e., the second feature vector of the harmonics band. That is, the processor 520 may search for the position of the notification sound signal in the second speech signal using the first feature vector of the reference signal and an area which corresponds to the determined partial area of the entire frequency area, where the partial area itself corresponds to at least a portion of the second speech signal as described above. As a result of the comparison between the first feature vector and the second feature vector, referring to 1200c of FIG. 12, as indicated by reference numeral 1210c, a position where the mean squared error (MSE) is less than or equal to a threshold, e.g., a position where the MSE indicates the minimum value, may be identified as the position of the notification sound signal. When the position 1210c of the notification sound signal is identified, the signal corresponding to a designated section length 1220c of the reference signal from the identified position 1210c of the notification sound signal may be removed using the reference signal of FIG. 11.

Further, the processor 520 may identify the similarity as a result of comparison between the first feature vector and the second feature vector, and identify the position having the similarity greater than or equal to a threshold as the position of the notification sound signal. In the above description, the case of identifying the position of the notification sound signal in the speech signal using the MSE or the similarity has been described as an example, but the method of determining the position is not limited thereto and the position may be determined in various ways.

According to an embodiment, the first feature vector of the partial area including the user's speech feature and the second feature vector of the frequency area corresponding to at least the portion of the second speech signal of the entire frequency area corresponding to the reference signal of FIG. 11 may be used in performing windowing using the notification sound search range so as to search for the position of the notification sound signal. That is, the first feature vector and the second feature vector are used in performing windowing using the notification sound search range. Here, the notification sound search range may be determined based on the time point at which the notification sound is output. For example, when the output time point of the notification sound is n0, a search is performed in the range [n0-Δ1, n0+Δ2].

In this case, the first feature vector and the second feature vector may be normalized for comparison between the two feature vectors, and the position of the notification sound signal may be identified by comparing the normalized first and second feature vectors. The processor 520 may remove the notification sound signal from the second speech signal using the signal obtained by normalizing the reference signal based on the position of the notification sound signal. For example, as illustrated in 1200d of FIG. 12, as the signal of the section corresponding to 1220d is removed, a speech signal y_new where the notification sound signal has been removed may be obtained as illustrated in 1200e of FIG. 12.

In operation 925, the electronic device 101 performs speech recognition on the notification sound signal-removed second speech signal of the second period.

On the other hand, when the output of the preset notification sound is not required, in operation 930, the electronic device 101 performs speech recognition on the second speech signal of the second period. For example, when the output of the notification sound is not required, since the notification sound is not output, the second speech signal of the second period does not include the notification sound, and thus, after the pre-processing operation of removing the notification sound is omitted, speech recognition may be performed on the second speech signal of the second period in a post-processing operation. It will be appreciated that operation 930 is omitted in various embodiments, to focus more on operations 915 and 920. Further, in some embodiments operation 925 may be omitted to focus more on operations 915 and 920, where explicit inclusion of a speech recognition operation is not necessary for explaining operation 920.

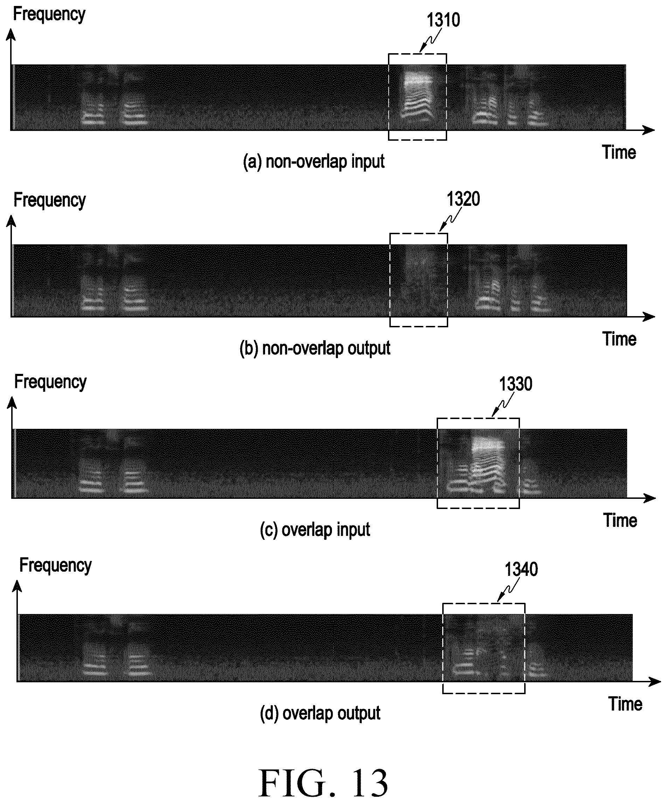

FIG. 13 is a view illustrating examples of input signals before/after notification sound removal when a notification sound overlaps, and does not overlap, a user speech, according to an embodiment.

FIG. 13(a) and FIG. 13(b) illustrate an example in which when the notification sound (or the notification sound signal) is removed in a state in which the portion 1310 corresponding to the notification sound after the wake word does not overlap the user speech portion as illustrated in FIG. 13(a). The speech signal where the portion 1320 corresponding to the notification sound has been removed may be obtained as illustrated in FIG. 13(b).

On the other hand, FIG. 13(c) and FIG. 13(d) illustrate an example in which when the notification sound is removed in a state in which the portion 1330 corresponding to the notification sound after the wake word and the user speech overlap each other as illustrated in FIG. 13(c). The speech signal where the portion 1340 corresponding to the notification sound has been removed may be obtained, such as according to the examples disclosed herein, as illustrated in FIG. 13(d).

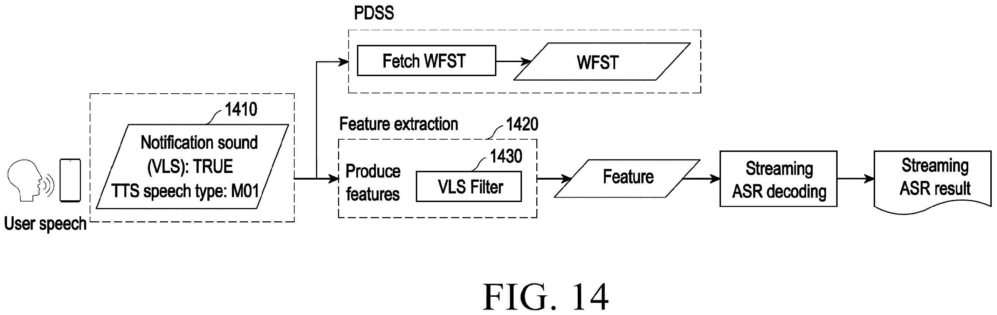

FIG. 14 is a view illustrating a pre-processing operation for removing a notification sound before speech recognition according to an embodiment.

Referring to FIG. 14, the notification sound (e.g., VLS) filter 1430 may operate all the time or selectively as needed. Here, the notification sound filtering operation may be performed by a processor (e.g., the processor 520 of FIGS. 5A and 5B) or a notification sound filtering unit (e.g., the notification sound filtering unit 523 of FIG. 5B).

According to an embodiment, as the user utters (e.g. speaks), wake word recognition is performed on the speech signal of the first period, and in operation 1410, it may be determined whether to output a notification sound in response to wake word recognition. After recognizing the wake word, it (e.g. the processor 520) waits for a speech command input according to the user's additional utterance, which may be defined as the second period. When it is determined that the speech input according to the additional utterance is not performed for a predetermined time (e.g., about 2.5 seconds), a notification sound (e.g., VLS) is output. In this case, since the notification sound to be filtered may vary depending on the speech style, the client (or the processor 520) may provide notification sound-related information (e.g., VLS waveform, playback TTS speech identification (ID), or VLS feature information).

In this case, since a speech command may be input from the user through a microphone (e.g., the microphone 550 of FIGS. 5A and 5B) even while monitoring whether the notification sound is output, notification sound removal or speech recognition (ASR) may be performed on the speech signal input through the microphone 550. When the notification sound is output, a flag indicating that the notification sound has been reproduced may be transferred from the client (or the processor 520) to the notification sound (e.g., VLS) filter 1430.

According to an embodiment, the notification sound varies depending on the wake word. For example, the speech assistant system supports a plurality of wake words, and outputs a notification sound in a different tone and a different content (or text) according to each wake word. In this case, when the input wake word is recognized, the wake word ID may be determined, and which notification sound is to be output may be determined according to the wake word ID.

If the notification sound is not output, a flag indicating that the notification sound has not been reproduced may be transferred from the client (or the processor 520) to the notification sound (e.g., VLS) filter 1430, and thus the operation of the notification sound (e.g., VLS) filter 1430 may be omitted.

FIG. 15 is a flowchart illustrating operations of an electronic device to generate and store a reference signal according to an embodiment.

Referring to FIG. 15, the operation method may include operations 1505 to 1530. Each operation of the operation method of FIG. 15 may be performed by an electronic device (e.g., the electronic device 101 of FIGS. 1 to 5A), at least one processor (e.g., the processor 120 of FIG. 1 or the processor 520 of FIGS. 5A and 5B) of the electronic device. In various embodiments, at least one of operations 1505 to 1530 is omitted, the order of some operations is changed, another operation is added, and/or at least two operations are performed in parallel. FIG. 15 is described with reference to FIG. 16 for a better understanding. Here, FIG. 16 is an exemplary screen view for providing guide information for storing (or registering) a reference signal according to an embodiment.

In operation 1505, the electronic device 101 performs the operation of selecting a speech synthesis model. In operation 1510, the electronic device 101 converts the notification text into a notification sound. After activating the microphone 550 in operation 1515, the electronic device 101 outputs the notification sound through the speaker 555 in operation 1520. In operation 1525, the electronic device 101 obtains a reference signal corresponding to the notification sound through the activated microphone 550. In operation 1530, the electronic device 101 stores (or registers) the obtained reference signal in the memory. In an embodiment, the electronic device 101 converts the obtained reference signal into a feature vector and stores the feature vector in the memory.

A method for processing a speech signal according to an embodiment may be largely divided into the step of generating and storing (or registering) a reference signal, and the step of removing (or filtering) the notification sound (or the notification sound signal) by processing the input speech signal. For example, the reference signal may be previously generated in the registration step, and the reference signal may be used to remove the notification sound signal in the filtering step.

For generating the reference signal, as illustrated in FIG. 16, a user interface (UI) 1600 for selecting text-to-speech (TTS) of the speech assistant may be provided to the user. In the user interface 1600, an object for selecting the language settings and the speech style, e.g., the speech 1610 of each speech assistant, may be displayed. According to an embodiment, if the speech of the speech assistant is selected, a sample speech is output while a sound (or a speech signal) corresponding to the sample speech may simultaneously be input through the microphone 550. The electronic device 101 may generate and store a reference signal for the notification sound through the received sound. According to an embodiment, the electronic device 101 stores and manages the reference signal using identification information (e.g., ID) corresponding to each speech assistant so as to distinguish speech styles.

According to an embodiment, an object 1620 for obtaining the reference signal is further displayed on the user interface 1600. For example, if the object 1620 for speech learning is selected by the user, the electronic device 101 converts a notification sound phrase (or content) for leading to the user's additional utterance into a waveform based on a speech synthesis model (e.g., TTS model) corresponding to the previously selected speech assistant speech. Then, while the microphone 550 is activated, the notification sound phrase of the waveform may be output through the speaker 555, and the notification sound input as feedback through the microphone 550 may be stored as a reference signal. Here, the reference signal may be stored in the form of a waveform, and may be characterized and stored with substantially the same algorithm as the feature vector used for speech recognition. Accordingly, the reference signal may be stored in various forms, but the disclosure may not be limited thereto.

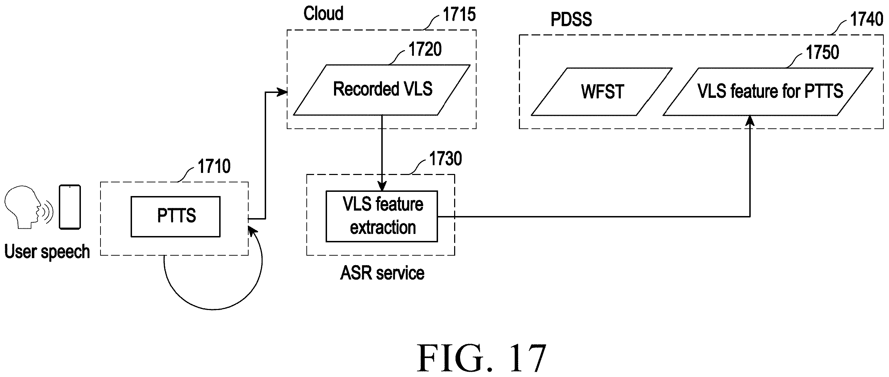

FIG. 17 is a view illustrating a method for managing a notification sound for a specific speaker according to an embodiment.

Referring to FIG. 17, a personalized-text-to-speech (PTTS) 1710 of a client may be specialized for the speaker's voice. A personalized TTS trained based on personally gathered speech data may be used as the speech to be used for the speech assistant. When adaptive training is performed with user speech data to generate a PTTS, the electronic device 101 may reproduce a notification sound generated based on the PTTS model generated as a result of the training through a speaker (e.g., the speaker 555 of FIGS. 5A and 5B). In response to the reproduction of the notification sound, a reference signal corresponding to the notification sound may be generated using a signal received (or recorded) through a microphone (e.g., the microphone 550 of FIGS. 5A and 5B) of the electronic device 101. The generated reference signal (or recorded VLS) 1720 may be uploaded into the cloud 1715 according to user consent. Even if the user does not agree, a feature extracted from a reference signal pre-made by a basic PTTS model used for user speech training among the plurality of PTTS models may be stored in the PDSS 1740 instead.

Thereafter, the notification sound feature 1730 extracted from the reference signal (or recorded VLS) 1720 generated in the cloud 1715 may be stored in the PDSS 1740 and managed as the notification sound feature 1750 for the PTTS. Accordingly, it is possible to provide PTTS specialized for the user's speech.

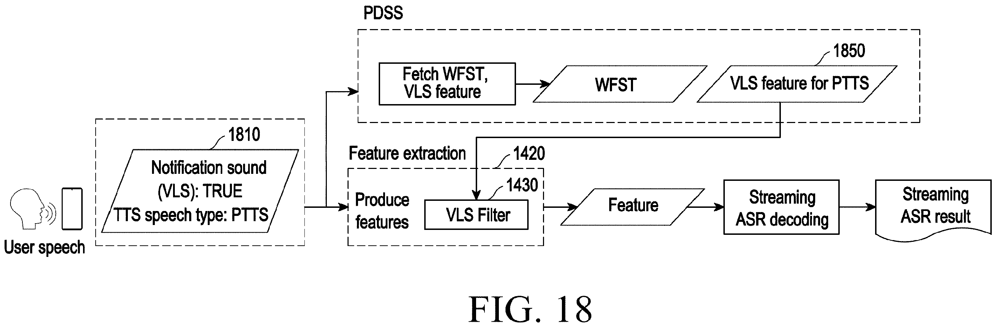

FIG. 18 is a view illustrating a pre-processing operation for removing a notification sound for a specific speaker before speech recognition according to an embodiment.

Referring to FIG. 18, when the PTTS model generated in response to the user utterance is used (1810) as the speech of the speech assistant, the notification sound feature 1850 for the PTTS stored in the server, e.g., the PDSS may be taken and used during feature extraction 1420 in the operation of the notification sound (e.g., VLS) filter 1430 performed before speech recognition.

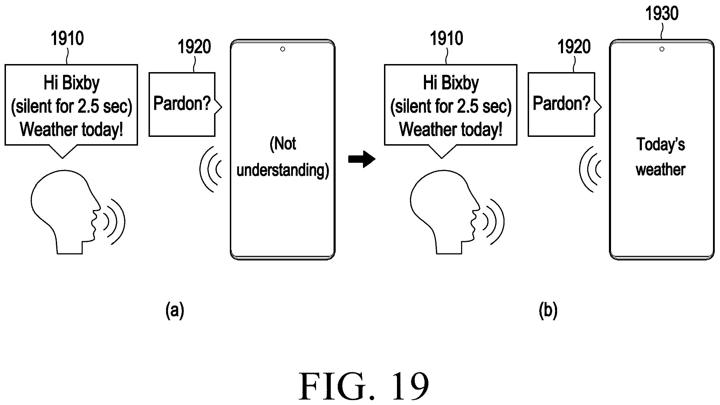

FIG. 19 is a view illustrating an example screen showing speech recognition results before and after notification sound removal.

FIG. 19(a) illustrates an example in which the user's additional utterance 1910 is input to the electronic device 101 after the wake word 'Hi Bixby' and a silence section for a predetermined time, and a notification sound 1920 for leading to the user's additional utterance is output from the electronic device 101. Before removing the notification sound, the electronic device 101 fails in speech recognition. That is, in FIG. 19(a), the additional utterance ("Weather today!") is received by the electronic device 101 (e.g. microphone 550) at least partially overlapping with the electronic device 101 (e.g. microphone 550) receiving the output notification sound; and, if the notification sound is not removed (or filtered), speech recognition fails (e.g. because the second speech signal comprises the output notification sound partially overlapping the additional utterance).

On the other hand, FIG. 19(b) illustrates an example in which the user's additional utterance 1910 is input to the electronic device 101 after the wake word 'Hi Bixby' and the silence section for a predetermined time, and a notification sound 1920 for leading to the user's additional utterance is output from the electronic device 101. According to an embodiment, even if the notification sound 1920 for leading to the user's additional utterance and the user's additional utterance 1910 at least partially overlap each other, the notification sound signal included in the speech signal is accurately removed using a reference signal previously generated based on the position of the notification sound signal, thereby enhancing speech recognition performance. Accordingly, the result of performing speech recognition on the notification sound signal-removed speech signal may be displayed as text on the screen 1930 of the electronic device 101, and a designated operation based on the text may be performed.

According to an embodiment, the computational complexity may be reduced as compared with when an adaptive echo canceller (AEC) algorithm is continuously applied in the pre-processing step before speech recognition.

According to an embodiment, it is possible to efficiently perform speech recognition using only the speech signal according to the user's utterance by adaptively removing the notification sound according to whether the notification sound is generated in the pre-processing step.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as " 1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-transitory storage medium storing instructions, the instructions may be configured to, when executed by at least one processor 120 or 520 of an electronic device 101, enable the electronic device to perform at least one operation. The at least one operation may comprise one or more of: receiving a first speech signal through a microphone 295 or 550 during a first period; detecting a wake word from the first speech signal and outputting a preset notification sound in response to detecting the wake word; detecting a notification sound signal corresponding to the output notification sound from a second speech signal received through the microphone during a second period; removing the notification sound signal from the second speech signal of the second period, based on a position of the detected notification sound signal; or performing speech recognition on the second speech signal of the second period where the notification sound signal is removed.

According to an example, there is provided an electronic device comprising: a microphone; at least one processor; and memory storing instructions that, when executed by the at least one processor, cause the electronic device to: receive a first speech signal through the microphone during a first period, detect a wake word from the first speech signal, output a preset notification sound in response to detecting the wake word, detect a notification sound signal corresponding to the output notification sound from a second speech signal received through the microphone during a second period, remove the notification sound signal from the second speech signal of the second period based on a position of the detected notification sound signal, and perform speech recognition on the second speech signal of the second period where the notification sound signal is removed.

According to an example, the instructions cause the electronic device to: determine a notification sound search range, and identify the position of the notification sound signal by comparing a pre-stored reference signal and at least a portion of the second speech signal of the second period within the notification sound search range.

According to an example, the electronic device further comprises a speaker, wherein the instructions cause the electronic device to: convert notification text into a notification sound based on one of a plurality of speech synthesis models, output the converted notification sound through the speaker, obtain a reference signal corresponding to the output notification sound which is input through the microphone, and store the obtained reference signal in the memory.

According to an example, the instructions cause the electronic device to remove a signal corresponding to a designated section length of the reference signal from the position of the notification sound signal in the second speech signal, using the reference signal.

According to an example, the instructions cause the electronic device to: obtain a first feature vector of a frequency area corresponding to the reference signal, compare the first feature vector with a second feature vector of the frequency area corresponding to at least a portion of the second speech signal within the notification sound search range, and identify the position of the notification sound signal based on a result of the comparison.

According to an example, the instructions cause the electronic device to: determine a partial area including a speech feature of an entire frequency area corresponding to the reference signal, and identify the position of the notification sound signal using a first feature vector of the partial area.

According to an example, the instructions cause the electronic device to identify a position where a mean squared error (MSE) is a threshold or less as the position of the notification sound signal by comparing the first feature vector and the second feature vector.

According to an example, wherein the instructions cause the electronic device to: identify a similarity between the first feature vector and a second feature vector of an area corresponding to a partial area of an entire frequency area corresponding to at least a portion of the second speech signal, and identify a position where the similarity is a threshold or more as the position of the notification sound signal.

According to an example, the instructions cause the electronic device to: normalize the first feature vector and the second feature vector, identify the position of the notification sound signal by comparing the normalized first and second feature vectors, and remove the notification sound signal using a signal obtained by normalizing the reference signal based on the position of the notification sound signal.

According to an example, the instructions cause the electronic device to: determine the notification sound search range based on a time of outputting the notification sound.

According to an example, the instructions cause the electronic device to: generate text data by performing the speech recognition on the second speech signal of the second period where the notification sound signal is removed and perform a designated operation based on the text data.

According to an example, there is provided a method for processing a speech signal by an electronic device, comprising: receiving a first speech signal through a microphone of the electronic device during a first period, detecting a wake word from the first speech signal, outputting a preset notification sound in response to detecting the wake word, detecting a notification sound signal corresponding to the output notification sound from a second speech signal received through the microphone during a second period, removing the notification sound signal from the second speech signal of the second period, based on a position of the detected notification sound signal, and performing speech recognition on the second speech signal of the second period where the notification sound signal is removed.

According to an example, the method further comprises: determining a notification sound search range, and identifying the position of the notification sound signal by comparing a prestored reference signal and at least a portion of the second speech signal of the second period within the notification sound search range.

According to an example, removing the notification sound signal from the second speech signal of the second period includes removing a signal corresponding to a designated section length of the reference signal from the identified position of the notification sound signal in the second speech signal, using the reference signal.

According to an example, the method further comprises: obtaining a first feature vector of a frequency area corresponding to the reference signal, comparing the first feature vector with a second feature vector of the frequency area corresponding to at least a portion of the second speech signal within the notification sound search range, and identifying the position of the notification sound signal, based on a result of the comparison.

According to an example, obtaining the first feature vector of the frequency area corresponding to the reference signal includes: determining a partial area including a speech feature of an entire frequency area corresponding to the reference signal, and obtaining the first feature vector of the partial area.

According to an example, the position of the notification sound signal corresponds to a position where a mean squared error (MSE) is a threshold or less or a similarity is a threshold or more based on comparing the first feature vector and the second feature vector.

According to an example, the method further comprises: converting notification text into a notification sound based on any one of a plurality of speech synthesis models, outputting the converted notification sound through a speaker of the electronic device, obtaining a reference signal corresponding to the output notification sound, input through the microphone, and storing the obtained reference signal in memory of the electronic device.

According to an example, the method further comprises: generating text data by performing the speech recognition on the second speech signal of the second period where the notification sound signal is removed, and performing a designated operation based on the text data.

It will also be appreciated that the present disclosure includes examples according to the following numbered paragraphs:
Paragraph 1. An electronic device comprising: a microphone; at least one processor; and memory storing instructions that, when executed by the at least one processor, cause the electronic device to: receive a first speech signal through the microphone, detect a wake word from the first speech signal, output a preset notification sound in response to detecting the wake word, and remove a notification sound signal from a second speech signal, received through the microphone, based on a position of the detected notification sound signal in the second speech signal, wherein the notification sound signal corresponds to the output preset notification sound.
Paragraph 2. The electronics device of Paragraph 1, wherein the instructions cause the electronic device to: remove the notification sound signal from the second speech signal based on a reference signal stored in the electronic device.
Paragraph 3. The electronic device of Paragraph 2, wherein the instructions cause the electronic device to: determine a notification sound search range; and identify the position of the notification sound signal by comparing the reference signal and at least a portion of the second speech signal of the second period within the notification sound search range.
Paragraph 4. The electronic device of Paragraph 3, the instructions cause the electronic device to: determine the notification sound search range based on a time of outputting the notification sound.
Paragraph 5. The electronic device of any on of Paragraphs 2 to 4, further comprising a speaker, wherein the instructions cause the electronic device to: obtain the preset notification sound by converting notification text based on one of a plurality of speech synthesis models; output the converted notification sound through the speaker; receive, through the microphone, the notification sound output through the speaker; obtain a signal corresponding to the received notification sound; and store the obtained signal in the memory as the reference signal.
Paragraph 6. The electronic device of any one of Paragraphs 2 to 5, wherein the instructions cause the electronic device to: remove a section of signal corresponding to a designated section length of the reference signal from the position of the notification sound signal in the second speech signal, using the reference signal.
Paragraph 7. The electronic device of Paragraph 3 or Paragraph 4, wherein the instructions cause the electronic device to: obtain a first feature vector of a frequency area corresponding to the reference signal; compare the first feature vector with a second feature vector of the frequency area corresponding to at least a portion of the second speech signal within the notification sound search range; and identify the position of the notification sound signal based on a result of the comparison.
Paragraph 8. The electronic device of Paragraph 7, wherein the instructions cause the electronic device to identify a position where a mean squared error (MSE) is a threshold or less as the position of the notification sound signal by comparing the first feature vector and the second feature vector.
Paragraph 9. The electronic device of any one of Paragraphs 2 to 6, wherein the instructions cause the electronic device to: determine a partial area including a speech feature of an entire frequency area corresponding to the reference signal; and identify the position of the notification sound signal using a first feature vector of the partial area.
Paragraph 10. The electronic device of Paragraph 9, wherein the instructions cause the electronic device to: identify a similarity between the first feature vector and a second feature vector of an area corresponding to a partial area of an entire frequency area corresponding to at least a portion of the second speech signal; and identify a position where the similarity is a threshold or more as the position of the notification sound signal.
Paragraph 11. The electronic device of any one of Paragraphs 7, 8 or 10 , the instructions cause the electronic device to: normalize the first feature vector and the second feature vector; identify the position of the notification sound signal by comparing the normalized first and second feature vectors; and remove the notification sound signal using a signal obtained by normalizing the reference signal based on the position of the notification sound signal.
Paragraph 12. The electronic device of any of Paragraphs 1 to 11, wherein the first speech signal is received during a first period; wherein the second speech signal is received during a second period; and wherein the instructions cause the electronic device to: perform speech recognition on the second speech signal where the notification sound signal is removed.
Paragraph 13. The electronic device of Paragraph 12, wherein the instructions cause the electronic device to: generate text data by performing the speech recognition on the second speech signal where the notification sound signal is removed and perform a designated operation based on the text data.
Paragraph 14. A method for processing a speech signal by an electronic device, comprising: receiving a first speech signal through a microphone of the electronic device, detecting a wake word from the first speech signal, outputting a preset notification sound in response to detecting the wake word, and removing a notification sound signal from a second speech signal, received through the microphone, based on a position of the detected notification sound signal in the second speech signal, wherein the notification sound signal corresponds to the output preset notification sound.
Paragraph 15. The method of Paragraph 14, wherein removing the notification sound signal comprises: removing the notification sound signal from the second speech signal based on a reference signal stored in the electronic device.
Paragraph 16. The method of Paragraph 15, further comprising: determining a notification sound search range; and identifying the position of the notification sound signal by comparing the reference signal and at least a portion of the second speech signal of the second period within the notification sound search range.
Paragraph 17. The method of Paragraph 16, wherein determining the notification sound search range comprises: determining the notification sound search range based on a time of outputting the notification sound.
Paragraph 18. The method of any of Paragraphs 15 to 17, wherein the electronic device further comprises a speaker; and wherein the method comprises: obtaining the preset notification sound by converting notification text based on one of a plurality of speech synthesis models; outputting the converted notification sound through the speaker; receiving, through the microphone, the notification sound output through the speaker; obtaining a signal corresponding to the received notification sound; and storing the obtained signal in the memory as the reference signal.
Paragraph 19. The method of any of Paragraphs 15 to 18, wherein removing the notification sound signal comprises: removing a section of signal corresponding to a designated section length of the reference signal from the position of the notification sound signal in the second speech signal, using the reference signal.
Paragraph 20. The method of any of Paragraphs 16 or 17, further comprising: obtaining a first feature vector of a frequency area corresponding to the reference signal; comparing the first feature vector with a second feature vector of the frequency area corresponding to at least a portion of the second speech signal within the notification sound search range; and identifying the position of the notification sound signal based on a result of the comparison.
Paragraph 21. The method of Paragraph 20, further comprising: identifying a position where a mean squared error (MSE) is a threshold or less as the position of the notification sound signal by comparing the first feature vector and the second feature vector.
Paragraph 22. The method of any of Paragraphs 15 to 19, further comprising: determining a partial area including a speech feature of an entire frequency area corresponding to the reference signal, and identifying the position of the notification sound signal using a first feature vector of the partial area.
Paragraph 23. The electronic device of Paragraphs 22, further comprising: identifying a similarity between the first feature vector and a second feature vector of an area corresponding to a partial area of an entire frequency area corresponding to at least a portion of the second speech signal, and identifying a position where the similarity is a threshold or more as the position of the notification sound signal.
Paragraph 24. The method of any one of Paragraphs 20, 21 or 23, wherein removing the notification sound signal comprises: normalizing the first feature vector and the second feature vector; identifying the position of the notification sound signal by comparing the normalized first and second feature vectors, and removing the notification sound signal using a signal obtained by normalizing the reference signal based on the position of the notification sound signal.
Paragraph 25. The method of any of Paragraphs 14 to 24, wherein the first speech signal is received during a first period; wherein the second speech signal is received during a second period; and wherein method comprises: performing speech recognition on the second speech signal where the notification sound signal is removed.
Paragraph 26. The method of Paragraph 25, further comprising: generating text data by performing the speech recognition on the second speech signal where the notification sound signal is removed, and performing a designated operation based on the text data.
Paragraph 27. A non-transitory storage medium storing instructions configured to, when executed by at least one processor of an electronic device, cause the electronic device to perform at least one operation, the at least one operation comprising: receiving a first speech signal through a microphone, detecting a wake word from the first speech signal, outputting a preset notification sound in response to detecting the wake word, and removing a notification sound signal from a second speech signal, received through the microphone, based on a position of the detected notification sound signal in the second speech signal, wherein the notification sound signal corresponds to the output preset notification sound.

## Claims

1. An electronic device (101) comprising:
a microphone (295, 550);
at least one processor (120, 292, 520); and
memory (130, 299, 530) storing instructions that, when executed by the at least one processor, cause the electronic device to:
receive a first speech signal through the microphone,
detect a wake word from the first speech signal,
output a preset notification sound in response to detecting the wake word, and
remove a notification sound signal from a second speech signal, received through the microphone, based on a position of a detected notification sound signal in the second speech signal, wherein the notification sound signal corresponds to the output preset notification sound.

2. The electronics device (101) of claim 1, wherein the instructions cause the electronic device to:
remove the notification sound signal from the second speech signal based on a reference signal stored in the electronic device.

3. The electronic device of claim 2, wherein the instructions cause the electronic device to:
determine a notification sound search range, and
identify the position of the notification sound signal by comparing the reference signal and at least a portion of the second speech signal within the notification sound search range.

4. The electronic device of claim 3, the instructions cause the electronic device to: determine the notification sound search range based on a time of outputting the notification sound.

5. The electronic device of any one of claims 2 to 4, further comprising a speaker (294, 555),
wherein the instructions cause the electronic device to:
obtain the preset notification sound by converting notification text based on one of a plurality of speech synthesis models,
output the converted notification sound through the speaker,
receive, through the microphone, the notification sound output through the speaker,
obtain a signal corresponding to the received notification sound, and
store the obtained signal in the memory as the reference signal.

6. The electronic device of any one of claims 2 to 5, wherein the instructions cause the electronic device to:
remove a section of signal corresponding to a designated section length of the reference signal from the position of the notification sound signal in the second speech signal, using the reference signal.

7. The electronic device of claim 3 or claim 4, wherein the instructions cause the electronic device to:
obtain a first feature vector of a frequency area corresponding to the reference signal,
compare the first feature vector with a second feature vector of the frequency area corresponding to at least a portion of the second speech signal within the notification sound search range, and
identify the position of the notification sound signal based on a result of the comparison.

8. The electronic device of claim 7, wherein the instructions cause the electronic device to identify a position where a mean squared error (MSE) is a threshold or less as the position of the notification sound signal by comparing the first feature vector and the second feature vector.

9. The electronic device of any one of claims 2 to 6, wherein the instructions cause the electronic device to:
determine a partial area including a speech feature of an entire frequency area corresponding to the reference signal, and
identify the position of the notification sound signal using a first feature vector of the partial area.

10. The electronic device of claim 9, wherein the instructions cause the electronic device to:
identify a similarity between the first feature vector and a second feature vector of an area corresponding to a partial area of an entire frequency area corresponding to at least a portion of the second speech signal, and
identify a position where the similarity is a threshold or more as the position of the notification sound signal.

11. The electronic device of any one of claims 7, 8 or 10, the instructions cause the electronic device to:
normalize the first feature vector and the second feature vector,
identify the position of the notification sound signal by comparing the normalized first and second feature vectors, and
remove the notification sound signal using a signal obtained by normalizing the reference signal based on the position of the notification sound signal.

12. The electronic device of any previous claim, wherein the first speech signal is received during a first period;
wherein the second speech signal is received during a second period; and
wherein the instructions cause the electronic device to:
perform speech recognition on the second speech signal where the notification sound signal is removed.

13. The electronic device of claim 12, wherein the instructions cause the electronic device to: generate text data by performing the speech recognition on the second speech signal where the notification sound signal is removed and perform a designated operation based on the text data.

14. A method for processing a speech signal by an electronic device (101), comprising:
receiving a first speech signal through a microphone (295, 550) of the electronic device,
detecting a wake word from the first speech signal,
outputting a preset notification sound in response to detecting the wake word, and
removing a notification sound signal from a second speech signal, received through the microphone, based on a position of a detected notification sound signal in the second speech signal, wherein the notification sound signal corresponds to the output preset notification sound.

15. A non-transitory storage medium storing instructions configured to, when executed by at least one processor (120, 520) of an electronic device (101), cause the electronic device to perform at least one operation, the at least one operation comprising:
receiving a first speech signal through a microphone (295, 550),
detecting a wake word from the first speech signal,
outputting a preset notification sound in response to detecting the wake word, and
removing a notification sound signal from a second speech signal, received through the microphone, based on a position of the detected notification sound signal in the second speech signal, wherein the notification sound signal corresponds to the output preset notification sound.
